# EUROPEAN PATENT SPECIFICATION

(11) **EP 1 401 162 B1**
(45) Date of publication and mention of the grant of the patent: **28.04.2010**
(21) Application number: 03021334.2
(22) Date of filing: 19.09.2003
(51) Int. Cl.: H04W 8/26, H04W 36/18

(54) **Packet communication terminal, packet communication system, packet communication method and packet communication program**
Paketkommunikationsendgerät, -system, -verfahren und -programm
Terminal, système, procédé et programme de communication en mode paquet

(30) Priority: 19.09.2002 JP 2002273852
(43) Date of publication of application: 24.03.2004
(73) Proprietor: NTT DoCoMo, Inc., Tokyo 100-6150 (JP)
(72) Inventor: Matsuoka, Hosei, 2-chome Chyoda-ku Tokyo 100-6150 (JP); Yoshimura, Takeshi, 2-chome Chyoda-ku Tokyo 100-6150 (JP); Ohya, Tomoyuki, 2-chome Chyoda-ku Tokyo 100-6150 (JP)
(74) Representative: Viering, Jentschura & Partner

(56) References cited:
- EP-A- 1 161 032
- GB-A- 2 288 301
- US-A- 5 724 412
- US-A- 6 067 444
- US-A1- 2002 105 926
- US-B1- 6 424 654

## Description

### BACKGROUND OF THE INVENTION

Field of the invention

The present invention relates to a packet communication terminal, a packet communication system, a packet communication method, and a packet communication program.

Related Background Art

In recent years, packet communication terminals carried by users are spreading as typified by mobile communication terminals and others. The packet communication terminals subject to movement like the mobile communication terminals migrate among communication areas established by base stations belonging to different networks. When a packet communication terminal migrates between communication areas of different networks, the packet communication terminal is assigned different network addresses in the respective networks connected before and after the migration. Mobile-IF is known as a technique of enabling the packet communication terminal assigned the different addresses before and after the migration as described, to communicate with a correspondent packet communication terminal. In Mobile-IP, a home agent (HA), which is a management node in a home network (HN) as a network to which the packet communication terminal originally belongs, and a foreign agent (FA), which is a management node in a foreign network (FN) being the other network, broadcast an agent advertisement in their network under management thereof. This agent advertisement is provided with the Life-Time field. For example, let us suppose a case where a packet communication terminal migrates from its HN to a certain FN. When the packet communication terminal fails to receive a new agent advertisement from the HN even after an elapsed time indicated in the Life-time field of the agent advertisement received last in the HN, it acknowledges that it has moved off the HN. Then the packet communication terminals receives an agent advertisement in the staying FN, and it acknowledges that it has moved into the FN. Then the packet communication terminal proceeds to the following registration process in order to implement packet communication in the staying FN. In this registration process, first, the packet communication terminal sends a registration request to the FA. This registration request is sent with a c/o (care-of) address or the packet communication terminal in the FN from the FA to the HA. Then the HA registers the c/c address of the packet communication terminal and the network address of the packet communication terminal in correlation with each other, and then sends is registration response to the FA. This registration response is forwarded from the FA to the packet communication terminal to be received by the packet communication terminal, thus completing the registration process. Thereafter, when a packet is sent from a correspondent packet communication terminal to the network address assigned by the HA, the HA adds the c/o address to this packet, encapsulates it, and then forwards the encapsulated packet to the FA. The FA removes the c/o address from the packet and spends the packet to the packet communication terminal. Mobile-IP as described above implements the packet communication from the correspondent packet communication terminal to the migrating packet communication terminal.

In the case where the packet communication terminal migrates from the HN to the FN, however, the migrating packet communication terminal is unable to receive a packet transmitted from the correspondent packet communication germinal during a period between a time when is has received the last agent advertisement in the network before the migration and a time of completion of the aforementioned registration process. A technique of decreasing the period in which the packet communication terminal is unable to receive any packet because of the migration is a technique of decreasing the above-described packet undelivered period by letting a base station controller perform the aforementioned registration process with the HA at a time of completion of a handover process executed on the occasion of a migration between base stations (e.g., Japanese Patent Application Laid-Open No. 2002-191066).
US 2002/105926 A1 discloses a method and system for soft handoff of a mobile terminal in a wireless CDMA IP network which utilize IP multicasting to a plurality of multicast network interface participants that reside at the mobile terminal.
EP 1 161 032 A2 discloses that a foreign agent to which a correspondent terminal is attached receives a Binding Update Message from a home agent so that the foreign agent encapsulates an IP packet destined for a mobile terminal before transmission thereto.
US 6,067,444 A discloses a method for enhanced duplicate message processing at a portable subscriber unit comprising the steps of receiving a first message having a first set of message data and a message sequence number associated with the first message.
US 6,424,654 B1 discloses a network system including a plurality of clients and two or more DHCP servers,
wherein each of the clients acquires respective IP addresses from the DHCP servers, finds respective differences between each of the acquired IP addresses and the reference address, selects a DHCP server which assigns an IP address whose distance from the reference address is smallest, and requests use of the IP address to the selected DHCP server.
GB 2 288 301 A discloses methods and apparatus for call handover between different mobile radio networks.
US 5,724,412 A discloses a method and system for providing a telephony subscriber with Internet information related to a caller attempting to call the subscriber.

### SUMMARY OF THE INVENTION

However, aforementioned Mobile-IP and the technique described in Japanese Patent Application Laid-Open No. 2002-191066 have the problem that there remains not a little time of delay in the packet communication between the packet communication terminal migrating between different networks, and the correspondent packet communication terminal. As a result, there occurs delay of data recovered from packets, so as to result in interruption of communication demanding the real time property, for example, as in voice communication or the like.

The present invention has been accomplished in order to solve the above problem and an object of the present invention is to provide a packet communication terminal, a packet communication system, a packet communication method, and a packet communication program capable of implementing delay-free packet communication with a correspondent packet communication terminal even during migration between different networks.

In order to achieve the above object, a mobile packet communication terminal according to the present invention is a mobile packet communication terminal for packet communication comprising: network address acquiring means for acquiring a network address of the mobile packet communication terminal from a network to which the packet communication terminal can be connected; network address storing means for storing the network address acquired by the network address acquiring means; network address notifying means for notifying a correspondent packet communication terminal of the network address stored in the network address storing means; and first packet receiving means for receiving a packet sent from the correspondent packet communication terminal to the network address; wherein when there exist a plurality of networks to which the mobile packet communication terminal can be connected, the network address acquiring means acquires a plurality of aforesaid network addresses from the respective networks; wherein the network address storing means stores the plurality of network addresses; wherein the network address notifying means notifies the correspondent packet communication terminal of the plurality of network addresses; and wherein the first packet receiving means receives packets generated from identical data and sent from the correspondent packet communication terminal to the respective network addresses.

In order to achieve the above object, a packet communication program according to the present invention is a packet communication program for letting a mobile packet communication terminal function as: network address acquiring means for acquiring a network address of the mobile packet communication terminal from a network to which the mobile packet communication terminal can be connected; network address storing means for storing the network address acquired by the network address acquiring means; network address notifying means for notifying a correspondent packet communication terminal of the network address stored in the network address storing means; and first packet receiving means for receiving a packet sent from the correspondent packet communication terminal to the network address; wherein when there exist a plurality of networks to which the mobile packet communication terminal can be connected, the network address acquiring means acquires a plurality of aforesaid network addresses from the respective networks; wherein the network address storing means stores the plurality of network addresses; wherein the network address notifying means notifies the correspondent packet communication terminal of the plurality of network addresses; and wherein the first packet receiving means receives packets generated from identical data and sent from the correspondent packet communication terminal to the respective network addresses.

In order to achieve the above object, a packet communication terminal according to the present invention is a packet communication terminal for packet communication comprising: destination network address storing means for storing a network address notified of by a correspondent mobile packet communication terminal, as a destination network address; second packet generating means for generating a packet from data to be transmitted to the correspondent mobile packet communication terminal; and second packet transmitting means for transmitting the packet to the correspondent packet communication terminal; wherein when a plurality of aforesaid network addresses are notified of by the correspondent mobile packet communication terminal, the destination network address storing means stores a plurality of aforesaid destination network addresses corresponding to the plurality of network addresses; and wherein when a plurality of aforesaid destination network addresses are stored in the destination network address storing means, the second packet transmitting means transmits aforesaid packets generated from identical data, to the respective destination network addresses.

In order to achieve the above object, a packet communication program according to the present invention is a packet communication program for letting a mobile packet communication terminal function as: destination network address storing means for storing a network address notified of by a correspondent mobile packet communication terminal, as a destination network address; second packet generating means for generating a packet from data to be transmitted to the correspondent mobile packet communication terminal; and second packet transmitting means for transmitting the packet to the correspondent packet communication terminal; wherein when a plurality of aforesaid network addresses are notified of by the correspondent mobile packet communication terminal, the destination network address storing means stores a plurality of aforesaid destination network addresses corresponding to the plurality of network addresses; and wherein when a plurality of aforesaid destination network addresses are stored in the destination network address storing means, the second packet transmitting means transmits aforesaid packets generated from identical data, to the respective destination network addresses.

In order to achieve the above object, a packet communication system according to the present invention is a packet communication system for packet communication between a first mobile packet communication terminal and a second packet communication terminal, wherein the first mobile packet communication terminal comprises: network address acquiring means for acquiring a network address of the mobile packet communication terminal from a network to which the first mobile packet communication terminal can be connected; network address storing means for storing the network address acquired by the network address acquiring means; network address notifying means for notifying the second packet communication terminal of the network address stored in the network address storing means; and first packet receiving means for receiving a packet sent from the second packet communication terminal to the network address; wherein the second packet communication terminal comprises: destination network address storing means for storing the network address notified of by the first mobile packet communication terminal, as a destination network address; second packet generating means for generating a packet from data to be transmitted to the first mobile packet communication terminal; and second packet transmitting means for transmitting the packet to the first mobile packet communication terminal; wherein when there exist a plurality of networks to which the first mobile packet communication terminal can be connected, the network address acquiring means of the first mobile packet communication terminal acquires a plurality of aforesaid network addresses from the respective networks; wherein the network address storing means of the first mobile packet communication terminal stores the plurality of network addresses; wherein the network address notifying means of the first mobile packet communication terminal notifies the second packet communication terminal of the plurality of network addresses; wherein when a plurality of aforesaid network addresses are notified of by the first mobile packet communication terminal, the destination network address storing means of the second packet communication terminal stores a plurality of aforesaid destination network addresses corresponding to the plurality of network addresses; wherein when a plurality of aforesaid destination network addresses are stored in the destination network address storing means, the second packet transmitting means of the second packet communication terminal transmits aforesaid packets generated from identical data, to the respective destination network addresses; and wherein the first packet receiving means of the first mobile packet communication terminal receives the packets generated from the identical data and transmitted from the second packet communication terminal to the respective network addresses.

In order to achieve the above object, a packet communication method according to the present invention is a packet communication method for packet communication between a first mobile packet communication terminal and a second packet communication terminal, the packet communication method comprising: a network address acquiring step wherein network address acquiring means of the first mobile packet communication terminal acquires a network address of the mobile packet communication terminal from a network to which the first mobile packet communication terminal can be connected; a network address storing step wherein network address storing means of the first mobile packet communication terminal stores the network address acquired by the network address acquiring means; a network address notifying step wherein network address notifying means of the first mobile packet communication terminal notifies the second packet communication terminal of the network address stored in the network address storing means; a destination network address storing step wherein destination network address storing means of the second packet communication terminal stores the network address notified of by the first mobile packet communication terminal, as a destination network address; a first packet generating step wherein second packet generating means of the second packet communication terminal generates a packet from data to be transmitted to the first mobile packet communication terminal; a first packet transmitting step wherein second packet transmitting means of the second packet communication terminal transmits the packet to the first mobile packet communication terminal; and a first packet receiving step wherein first packet receiving means of the first mobile packet communication terminal receives the packet transmitted from the second packet communication terminal to the network address; wherein in the network address acquiring step, when there exist a plurality of networks to which the first mobile packet communication terminal can be connected, the network address acquiring means of the first mobile packet communication terminal acquires a plurality of aforesaid network addresses from the respective networks; wherein in the network address storing step the network address storing means of the first mobile packet communication terminal stores the plurality of network addresses; wherein in the network address notifying step the network address notifying means of the first mobile packet communication terminal notifies the second packet communication terminal of the plurality of network addresses; wherein in the destination network address storing step, when a plurality of aforesaid network addresses are notified of by the first mobile packet communication terminal, the destination network address storing means of the second packet communication terminal stores a plurality of aforesaid destination network addresses corresponding to the respective network addresses; wherein in the first packet transmitting step, when a plurality of aforesaid destination network addresses are stored in the destination network address storing means, the second packet transmitting means of the second packet communication terminal transmits aforesaid packets generated from identical data, to the respective destination network addresses; and wherein in the first packet receiving step the first packet receiving means of the first mobile packet communication terminal receives the packets generated from the identical data and transmitted from the second packet communication terminal to the respective destination network addresses.

According to these aspects of the invention, when the first mobile packet communication terminal as a migrating mobile packet communication terminal moves, for example, to a location where communication areas of two or more networks overlap each other, and becomes connectible to each of the networks, the network address acquiring means acquires network addresses from the respective networks. The network address storing means stores these network addresses and the network address notifying means notifies the second packet communication terminal as a correspondent packet communication terminal of the network addresses. In the second packet communication terminal, the destination network address storing means stores the network addresses thus notified of, as respective destination network addresses. Then the second packet transmitting means transmits packets generated from identical data by the second packet generating means, to the respective destination network addresses stored in the destination network address storing means. In the first mobile packet communication terminal, the first packet receiving means receives the packets transmitted to the respective destination network addresses as described above, as packets generated from the identical data. In the case where the first mobile packet communication terminal is present at the location where communication areas of multiple networks overlap each other and is connectible to the networks, the second packet communication terminal is made to transmit packets to the network addresses acquired from the respective networks, as described above. Even if the first mobile packet communication terminal becomes no longer able to stay connected to any one of the networks because of further migration, it can also receive packets from the second packet communication terminal through the other networks without delay.

In the packet communication terminal of the present invention, when a plurality of aforesaid destination network addresses are stored in the destination network address storing means, the packets transmitted to the plurality of network addresses by the second packet transmitting means may be packets identical to each other.

In the packet communication program of the present invention, when a plurality of aforesaid destination network addresses are stored in the destination network address storing means, the packets transmitted to the plurality of network addresses by the second packet transmitting means may be packets identical to each other.

In the packet communication system of the present invention, when a plurality of aforesaid destination network addresses are stored in the destination network address storing means, the packets transmitted to the respective destination network addresses by the second packet transmitting means of the second packet communication terminal may be packets identical to each other.

In the packet communication method of the present invention, in the first packet transmitting step, when a plurality of aforesaid destination network addresses are stored in the destination network address storing means, the packets transmitted to the respective destination network addresses by the second packet transmitting means of the second packet communication terminal may be packets identical to each other.

According to these aspects of the invention, when there are a plurality of destination network addresses notified of by the first mobile packet communication terminal and stored in the destination network address storing means, the second packet communication terminal sends identical packets to the respective destination network addresses. Therefore, even if the first mobile packet communication terminal becomes no longer able to stay connected to any one of the networks because of migration, the first mobile packet communication terminal can receive packets transmitted to the network addresses assigned by the other networks. As a result, the first mobile packet communication terminal can receive packets transmitted from the second packet communication terminal, without delay.

Preferably, the packet communication terminal of the present invention further comprises second redundant packet generating means for generating redundant packets by forward error correction codes from data part of the packets generated by the second packet generating means; and when a plurality of aforesaid destination network addresses are stored in the destination network address storing means, the second packet transmitting means distributes and transmits the packets generated by the second packet generating means and the redundant packets generated by the second redundant packet generating means, to the plurality of destination network addresses in such a manner that even in a case where any one of the destination network addresses becomes ineffective, the correspondent mobile packet communication terminal can receive different packets in the number equal to or greater than the number of packets generated by the second packet generating means.

Preferably, the packet communication program of the present invention lets the packet communication terminal further function as: second redundant packet generating means for generating redundant packets by forward error correction codes from data part of the packets generated by the second packet generating means; and when a plurality of aforesaid destination network addresses are stored in the destination network address storing means, the second packet transmitting means distributes and transmits the packets generated by the second packet generating means and the redundant packets generated by the second redundant packet generating means, to the plurality of destination network addresses in such a manner that even in a case where any one of the destination network addresses becomes ineffective, the correspondent mobile packet communication terminal can receive different packets in the number equal to or greater than the number of packets generated by the second packet generating means.

Preferably, in the packet communication system of the present invention, the second packet communication terminal further comprises second redundant packet generating means for generating redundant packets by forward error correction codes from data part of the packets generated by the second packet generating means; and when a plurality of aforesaid destination network addresses are stored in the destination network address storing means, the second packet transmitting means of the second packet communication terminal distributes and transmits the packets generated by the second packet generating means and the redundant packets generated by the second redundant packet generating means, to the plurality of destination network addresses in such a manner that even in a case where any one of the destination network addresses becomes ineffective, the first mobile packet communication terminal can receive different packets in the number equal to or greater than the number of packets generated by the second packet generating means.

Preferably, the packet communication method of the present invention further comprises a first redundant packet generating step wherein second redundant packet generating means of the second packet communication terminal generates redundant packets by forward error correction codes from data part of the packets generated by the second packet generating means; and in the first packet transmitting step, when a plurality of aforesaid destination network addresses are stored in the destination network address storing means, the second packet transmitting means of the second packet communication terminal distributes and transmits the packets generated by the second packet generating means and the redundant packets generated by the second redundant packet generating means, to the plurality of destination network addresses in such a manner that even in a case where any one of the destination network addresses becomes ineffective, the first mobile packet communication terminal can receive different packets in the number equal to or greater than the number of packets generated by the second packet generating means.

According to these aspects of the invention, the second packet communication terminal makes the second redundant packet generating means generate redundant packets by forward error correction codes from data part of packets. Then the second packet transmitting means distributes and transmits the redundant packets and the packets generated by the second packet generating means, to the respective destination network addresses. This distribution is effected in such a manner that even if any one of the above destination network addresses becomes ineffective, the first mobile packet communication terminal can receive different packets in the number equal to or greater than the number of packets generated by the second packet generating means. Therefore, the first mobile packet communication terminal can receive the packets in the number that permits recovery of the above data. As a result, the first mobile packet communication terminal can receive packets transmitted from the second packet communication terminal, without delay.

Preferably, the mobile packet communication terminal of the present invention further comprises ineffective network address notifying means for notifying the correspondent packet communication terminal of the network address acquired by the network address acquiring means from the network to which the mobile packet communication terminal is no longer able to stay connected, and information that the network address is made ineffective.

Preferably, the packet communication program of the present invention lets the mobile packet communication terminal further function as: ineffective network address notifying means for notifying the correspondent packet communication terminal of the network address acquired by the network address acquiring means from the network to which the mobile packet communication terminal is no longer able to stay connected, and information that the network address is made ineffective.

Preferably, in the packet communication terminal of the present invention, based on the network address notified of by the correspondent mobile packet communication terminal, and information that the network address is made ineffective, the destination network address storing means makes ineffective the destination network address corresponding to the network address.

Preferably, in the packet communication program of the present invention, based on the network address notified of by the correspondent mobile packet communication terminal, and information that the network address' is made ineffective, the destination network address storing means makes ineffective the destination network address corresponding to the network address.

Preferably, in the packet communication system of the present invention, the first mobile packet communication terminal further comprises ineffective network address notifying means for notifying the second packet communication terminal of the network address acquired by the network address acquiring means from the network to which the first mobile packet communication terminal is no longer able to stay connected, and information that the network address is made ineffective; and based on the network address notified of by the first mobile packet communication terminal and the information that the network address is made ineffective, the destination network address storing means of the second packet communication terminal makes ineffective the destination network address corresponding to the network address.

Preferably, the packet communication method of the present invention further comprises an ineffective network address notifying step wherein ineffective network address notifying means of the first mobile packet communication terminal notifies the second packet communication terminal of the network address acquired by the network address acquiring means from the network to which the first mobile packet communication terminal is no longer able to stay connected, and information that the network address is made ineffective; and a destination network address disabling step wherein, based on the network address notified of by the first mobile packet communication terminal and the information that the network address is made ineffective, the destination network address storing means of the second packet communication terminal makes ineffective the destination network address corresponding to the network address.

According to these aspects of the invention, the first mobile packet communication terminal makes the ineffective network address notifying means notify the second packet communication terminal of a network address acquired from a network to which the first mobile packet communication terminal is no longer able to stay connected, together with information indicating the fact. Based on this notification, the second packet communication terminal makes ineffective the destination network address corresponding to the network address thus notified of, whereby it becomes feasible to cut down the waste that the second packet communication terminal sends packets to the network to which the first mobile packet communication terminal is no longer able to stay connected.

Preferably, the mobile packet communication terminal of the present invention further comprises radio wave intensity measuring means for, when a plurality of aforesaid network addresses are stored in the network address storing means, measuring intensities of radio waves from the respective networks from which the respective network addresses were acquired; and effective network address notifying means for, when a maximum intensity out of the intensities measured by the radio wave intensity measuring means is not less than a first predetermined threshold, notifying the correspondent packet communication terminal of the network address acquired by the network address acquiring means from the network having transmitted the radio wave of the maximum intensity, and information that a communication state with the aforesaid network is good.

Preferably, the packet communication program of the present invention lets the mobile packet communication terminal further function as: radio wave intensity measuring means for, when a plurality of aforesaid network addresses are stored in the network address storing means, measuring intensities of radio waves from the respective networks from which the respective network addresses were acquired; and effective network address notifying means for, when a maximum intensity out of the intensities measured by the radio wave intensity measuring means is not less than a first predetermined threshold, notifying the correspondent packet communication terminal of the network address acquired by the network address acquiring means from the network having transmitted the radio wave of the maximum intensity, and information that a communication state with the aforesaid network is good.

Preferably, in the mobile packet communication terminal of the present invention, when a plurality of aforesaid destination addresses are stored in the destination address storing means, based on the network address notified of by the correspondent packet communication terminal, and information that a communication state with the network from which the aforesaid network address was acquired is good, the second packet transmitting means transmits aforesaid packets to the destination network address stored corresponding to the network address in the destination network address storing means.

Preferably, in the packet communication program of the present invention, when a plurality of aforesaid destination addresses are stored in the destination address storing means, based on the network address notified of by the correspondent packet communication terminal, and information that a communication state with the network from which the aforesaid network address was acquired is good, the second packet transmitting means transmits aforesaid packets to the destination network address stored corresponding to the network address in the destination network address storing means.

Preferably, the packet communication system of the present invention further comprises radio wave intensity measuring means for, when a plurality of aforesaid network addresses are stored in the network address storing means, measuring intensities of radio waves from the respective networks from which the respective network addresses were acquired; and effective network address notifying means for, when a maximum intensity out of the intensities measured by the radio wave intensity measuring means is not less than a first predetermined threshold, notifying the second packet communication terminal of the network address acquired by the network address acquiring means from the network having transmitted the radio wave of the maximum intensity, and information that a communication state with the aforesaid network is good; and when a plurality of aforesaid destination addresses are stored in the destination address storing means, based on the network address notified of by the first mobile packet communication terminal, and the information that a communication state with the network from which the aforesaid network address was acquired is good, the second packet transmitting means of the second packet communication terminal transmits aforesaid packets to the destination network address stored corresponding to the network address in the destination network address storing means.

Preferably, the packet communication method of the present invention further comprises a radio wave intensity measuring step wherein when a plurality of aforesaid network addresses are stored in the network address storing means, radio wave intensity measuring means of the first mobile packet communication terminal measures intensities of radio waves from the respective networks from which the respective network addresses were acquired; and an effective network address notifying step wherein when a maximum intensity out of the intensities measured by the radio wave intensity measuring means is not less than a first predetermined threshold, effective network address notifying means of the first mobile packet communication terminal notifies the second packet communication terminal of the network address acquired by the network address acquiring means from the network having transmitted the radio wave of the maximum intensity, and information that a communication state with the aforesaid network is good; and in the first packet transmitting step, when a plurality of aforesaid destination addresses are stored in the destination address storing means, based on the network address notified of by the first mobile packet communication terminal, and the information that a communication state with the network from which the aforesaid network address was acquired is good, the second packet transmitting means of the second packet communication terminal transmits aforesaid packets to the destination network address stored corresponding to the network address in the destination network address storing means.

According to these aspects of the invention, when the first mobile packet communication terminal is connected to two or more networks, the first mobile packet communication terminal makes the radio wave intensity measuring means measure intensities of radio waves from the respective networks. When the maximum intensity out of the plurality of measured intensities is not less than the first predetermined threshold, the effective network address notifying means notifies the second packet communication terminal of the network address acquired from the network having transmitted the radio wave of the maximum intensity, and the information that the communication state with the relevant network is good. The second packet communication terminal makes the second packet transmitting means transmit packets to the destination network address corresponding to the network address included in the above notification. Namely, in the network transmitting the radio wave of the intensity being not less than the first predetermined threshold and being maximum among the multiple networks, it is assumed that the first mobile packet communication terminal is located near a base station belonging to the network and is in a good communication state. Therefore, under a judgment that this connection state can be maintained for the time being, the second packet communication terminal transmits packets to the above destination network address notified of. Therefore, the first mobile packet communication terminal can receive the packets transmitted from the second packet communication terminal, without delay and it is feasible to cut down the waste that the second packet communication terminal transmits packets through all the networks to which the first mobile packet communication terminal can be connected.

Preferably, the mobile packet communication terminal of the present invention further comprises communication state notifying means for, when all the intensities of the radio waves from the plurality of networks measured by the radio wave intensity measuring means are smaller than a second predetermined threshold, notifying the correspondent packet communication terminal of information that there is no network from that the mobile packet communication terminal can receive a radio wave of not less than the second predetermined threshold.

Preferably, the packet communication program of the present invention lets the mobile packet communication terminal further function as: communication state notifying means for, when all the intensities of the radio waves from the plurality of networks measured by the radio wave intensity measuring means are smaller than a second predetermined threshold, notifying the correspondent packet communication terminal of information that there is no network from that the mobile packet communication terminal can receive a radio wave of not less than the second predetermined threshold.

Preferably, in the packet communication terminal of the present invention, based on information that there is no network from that the correspondent mobile packet communication terminal can receive a radio wave of not less than a second predetermined threshold, notified of by the correspondent mobile packet communication terminal, the second packet transmitting means transmits the packets to the respective destination network addresses stored in the destination network address storing means.

Preferably, in the packet communication program of the present invention, based on information that there is no network from that the correspondent mobile packet communication terminal can receive a radio wave of not less than a second predetermined threshold, notified of by the correspondent mobile packet communication terminal, the second packet transmitting means transmits the packets to the respective destination network addresses stored in the destination network address storing means.

Preferably, in the packet communication system of the present invention, the first mobile packet communication terminal further comprises communication state notifying means for, when all the intensities of the radio waves from the plurality of networks measured by the radio wave intensity measuring means are smaller than a second predetermined threshold, notifying the second packet communication terminal of information that there is no network from that the first mobile packet communication terminal can receive a radio wave of not less than the second predetermined threshold; and based on the information that there is no network from that the first mobile packet communication terminal can receive a radio wave of not less than the second predetermined threshold, notified of by the first mobile packet communication terminal, the second packet transmitting means of the second packet communication terminal transmits the packets to the respective destination network addresses stored in the destination network address storing means.

Preferably, the packet communication method of the present invention further comprises a communication state notifying step wherein when all the intensities of the radio waves from the plurality of networks measured by the radio wave intensity measuring means are smaller than a second predetermined threshold, communication state notifying means of the first mobile packet communication terminal notifies the second packet communication terminal of information that there is no network from that the first mobile packet communication terminal can receive a radio wave of not less than the second predetermined threshold; and in the first packet transmitting step, based on the information that there is no network from that the first mobile packet communication terminal can receive a radio wave of not less than the second predetermined threshold, notified of by the first mobile packet communication terminal, the second packet transmitting means of the second packet communication terminal transmits the packets to the respective destination network addresses stored in the destination network address storing means.

According to these aspects of the invention, when the intensities of the radio waves from the respective networks measured by the above radio wave intensity measuring means are smaller than the second predetermined threshold, the first mobile packet communication terminal makes the communication state notifying means notify the second packet communication terminal of the information indicating that fact. The second packet communication terminal transmits packets to the respective destination network addresses stored in the destination network address storing means, based on the notification. Namely, when the intensities of the radio waves from the respective networks measured by the radio wave intensity measuring means are smaller than the second predetermined threshold, it is determined that the first mobile packet communication terminal is located in a boundary region among communication areas of the respective networks, and thus the second packet communication terminal transmits packets to the respective destination network addresses corresponding to the respective network addresses acquired from these networks by the first mobile packet communication terminal. Even if the first mobile packet communication terminal moves from the boundary region among networks to become no longer be able to stay connected to any one of the networks, the first mobile packet communication terminal can still receive packets transmitted through the other networks from the second packet communication terminal, without delay.

In order to achieve the above object, another mobile packet communication terminal according to the present invention is a mobile packet communication terminal for packet communication comprising: network address acquiring means for acquiring a network address of the mobile packet communication terminal from a network to which the mobile packet communication terminal can be connected; network address storing means for storing the network address acquired by the network address acquiring means; network address notifying means for notifying a correspondent packet communication terminal of the network address stored in the network address storing means; first packet generating means for generating a packet from data to be transmitted to the correspondent packet communication terminal; and first packet transmitting means for providing the packet with the network address stored in the network address storing means and for transmitting the packet to the correspondent packet communication terminal; wherein when there exist a plurality of networks to which the mobile packet communication terminal can be connected, the network address acquiring means acquires a plurality of aforesaid network addresses from the respective networks; wherein the network address storing means stores the plurality of network addresses; wherein the network address notifying means notifies the correspondent packet communication terminal of the plurality of network addresses; and wherein when a plurality of aforesaid network addresses are stored in the network address storing means, the first packet transmitting means provides aforesaid packets generated from identical data by the first packet generating means, with the network addresses acquired from the respective networks and transmits the packets to the respective networks.

In order to achieve the above object, another packet communication program according to the present invention is a packet communication program for letting a mobile packet communication terminal function as: network address acquiring means for acquiring a network address of the mobile packet communication terminal from a network to which the mobile packet communication terminal can be connected; network address storing means for storing the network address acquired by the network address acquiring means; network address notifying means for notifying a correspondent packet communication terminal of the network address stored in the network address storing means; first packet generating means for generating a packet from data to be transmitted to the correspondent packet communication terminal; and first packet transmitting means for providing the packet with the network address stored in the network address storing means and for transmitting the packet to the correspondent packet communication terminal; wherein when there exist a plurality of networks to which the mobile packet communication terminal can be connected, the network address acquiring means acquires a plurality of aforesaid network addresses from the respective networks; wherein the network address storing means stores the plurality of network addresses; wherein the network address notifying means notifies the correspondent packet communication terminal of the plurality of network addresses; and wherein when a plurality of aforesaid network addresses are stored in the network address storing means, the first packet transmitting means provides aforesaid packets generated from identical data by the first packet generating means, with the network addresses acquired from the respective networks and transmits the packets to the respective networks.

In order to achieve the above object, another packet communication terminal according to the present invention is a packet communication terminal for packet communication comprising: destination network address storing means for storing a network address notified of by a correspondent mobile packet communication terminal, as a destination network address; and second packet receiving means for receiving a packet transmitted from the correspondent mobile packet communication terminal; wherein when a plurality of aforesaid network addresses are notified of by the correspondent mobile packet communication terminal, the destination network address storing means stores a plurality of aforesaid destination network addresses corresponding to the respective network addresses; and wherein the second packet receiving means receives a packet transmitted from the correspondent mobile packet communication terminal, provided with one of the plurality of destination network addresses, and generated from identical data.

In order to achieve the above object, another packet communication program according to the present invention is a packet communication program for letting a packet communication terminal function as: destination network address storing means for storing a network address notified of by a correspondent mobile packet communication terminal, as a destination network address; and second packet receiving means for receiving a packet transmitted from the correspondent mobile packet communication terminal; wherein when a plurality of aforesaid network addresses are notified of by the correspondent mobile packet communication terminal, the destination network address storing means stores a plurality of aforesaid destination network addresses corresponding to the respective network addresses; and wherein the second packet receiving means receives a packet transmitted from the correspondent mobile packet communication terminal, provided with one of the plurality of destination network addresses, and generated from identical data.

In order to achieve the above object, another packet communication system according to the present invention is a packet communication system for packet communication between a first mobile packet communication terminal and a second packet communication terminal, wherein the first mobile packet communication terminal comprises: network address acquiring means for acquiring a network address of the mobile packet communication terminal from a network to which the first mobile packet communication terminal can be connected; network address storing means for storing the network address acquired by the network address acquiring means; network address notifying means for notifying the second packet communication terminal of the network address stored in the network address storing means; first packet generating means for generating a packet from data to be transmitted to the second packet communication terminal; and first packet transmitting means for providing the packet with the network address stored in the network address storing means and for transmitting the packet to the second packet communication terminal; wherein the second packet communication terminal comprises: destination network address storing means for storing a network address notified of by the first mobile packet communication terminal, as a destination network address; and second packet receiving means for receiving a packet transmitted from the first mobile packet communication terminal; wherein when there exist a plurality of networks to which the first mobile packet communication terminal can be connected, the network address acquiring means of the first mobile packet communication terminal acquires a plurality of aforesaid network addresses from the respective networks; wherein the network address storing means of the first mobile packet communication terminal stores the plurality of network addresses; wherein the network address notifying means of the first mobile packet communication terminal notifies the second packet communication terminal of the plurality of network addresses; wherein when a plurality of aforesaid network addresses are notified of by the first mobile packet communication terminal, the destination network address storing means of the second packet communication terminal stores a plurality of aforesaid destination network addresses corresponding to the respective network addresses; wherein when a plurality of aforesaid network addresses are stored in the network address storing means, the first packet transmitting means of the first mobile packet communication terminal provides aforesaid packets generated from identical data by the first packet generating means, with the network addresses acquired from the respective networks and transmits the packets to the respective networks; and wherein the second packet receiving means of the second packet communication terminal receives a packet transmitted from the first mobile packet communication terminal, provided with one of the plurality of network addresses, and generated from the identical data.

In order to achieve the above object, another packet communication method of the present invention is a packet communication method for packet communication between a first mobile packet communication terminal and a second packet communication terminal, the packet communication method comprising: a network address acquiring step wherein network address acquiring means of the first mobile packet communication terminal acquires a network address of the mobile packet communication terminal from a network to which the first mobile packet communication terminal can be connected; a network address storing step wherein network address storing means of the first mobile packet communication terminal stores the network address acquired by the network address acquiring means; a network address notifying step wherein network address notifying means of the first mobile packet communication terminal notifies the second packet communication terminal of the network address stored in the network address storing means; a destination network address storing step wherein destination network address storing means of the second packet communication terminal stores the network address notified of by the first mobile packet communication terminal, as a destination network address; a second packet generating step wherein first packet generating means of the first mobile packet communication terminal generates a packet from data to be transmitted to the second packet communication terminal; a second packet transmitting step wherein first packet transmitting means of the first mobile packet communication terminal provides the packet with the network address stored in the network address storing means and transmits the packet to the second packet communication terminal; and a second packet receiving step wherein second packet receiving means of the second packet communication terminal receives the packet transmitted from the first mobile packet communication terminal; wherein in the network address acquiring step, when there exist a plurality of networks to which the first mobile packet communication terminal can be connected, the network address acquiring means of the first mobile packet communication terminal acquires a plurality of aforesaid network addresses from the respective networks; wherein in the network address storing step the network address storing means of the first mobile packet communication terminal stores the plurality of network addresses; wherein in the network address notifying step the network address notifying means of the first mobile packet communication terminal notifies the second packet communication terminal of the plurality of network addresses; wherein in the destination network address storing step, when a plurality of aforesaid network addresses are notified of by the first mobile packet communication terminal, the destination network address storing means of the second packet communication terminal stores a plurality of aforesaid destination network addresses corresponding to the respective network addresses; wherein in the second packet transmitting step, when a plurality of aforesaid network addresses are stored in the network address storing means, the first packet transmitting means of the first mobile packet communication terminal provides aforesaid packets generated from identical data by the first packet generating means, with the network addresses acquired from the respective networks and transmits the packets to the respective networks; and wherein in the second packet receiving step the second packet receiving means of the second packet communication terminal receives a packet transmitted from the first mobile packet communication terminal, provided with one of the plurality of network addresses, and generated from the identical data.

According to these aspects of the invention, when the first mobile packet communication terminal as a migrating mobile packet communication terminal is present, for example, in a location where communication areas of two or more networks overlap each other so as to enable connections to the multiple networks, the network address acquiring means acquires network addresses from the respective networks. The network address storing means stores these network addresses and the network address notifying means notifies the second packet communication terminal as a correspondent packet communication terminal of the network addresses. In the second packet communication terminal, the destination network address storing means stores the network addresses thus notified of, as respective destination network addresses. In the first mobile packet communication terminal, the first packet transmitting means provides packets generated from identical data by the first packet generating means, with the above network addresses acquired from the respective networks, and transmits them to the respective networks. In the second packet communication terminal, the second packet receiving means receives a packet provided with one of the above network addresses, as a packet generated from the identical data. In the case where the first mobile packet communication terminal is located at the position where the communication areas of multiple networks overlap each other, as described above, it transmits packets generated from identical data, to these networks. Therefore, even if the first mobile packet communication terminal becomes no longer able to stay connected to any one of these networks, the second packet communication terminal can receive the packets sent through the other networks from the first mobile packet communication terminal, without delay.

In the packet communication terminal of the present invention, when a plurality of aforesaid network addresses are stored in the network address storing means, the packets transmitted to the respective networks by the first packet transmitting means may be packets identical to each other.

In the packet communication program of the present invention, when a plurality of aforesaid network addresses are stored in the network address storing means, the packets transmitted to the respective networks by the first packet transmitting means may be packets identical to each other.

In the packet communication system of the present invention, when a plurality of aforesaid network addresses are stored in the network address storing means, the packets transmitted to the respective networks by the first packet transmitting means of the first mobile packet communication terminal may be packets identical to each other.

In the packet communication method of the present invention, in the second packet transmitting step, when a plurality of aforesaid network addresses are stored in the network address storing means, the packets transmitted to the respective networks by the first packet transmitting means of the first mobile packet communication terminal may be packets identical to each other.

According to these aspects of the invention, when the first mobile packet communication terminal is connectible to two or more networks, it transmits identical packets generated from identical data, to the respective networks. Therefore, even if the first mobile packet communication terminal becomes unable to stay connected to any one of these networks because of migration, the second packet communication terminal can receive the packets transmitted through the other connectible networks from the first mobile packet communication terminal. As a result, the second packet communication terminal can receive the packets transmitted from the first mobile packet communication terminal, without delay.

Preferably, the packet communication terminal of the present invention further comprises first redundant packet generating means for generating redundant packets by forward error correction codes from data part of aforesaid packets generated by the first packet generating means, and the first packet transmitting means distributes and transmit the packets generated by the first packet generating means and the redundant packets generated by the first redundant packet generating means, to the networks in such a manner that even in a case where the mobile packet communication terminal is no longer able to stay connected to any one of the plurality of networks, the correspondent packet communication terminal can receive different packets in the number equal to or greater than the number of packets generated by the first packet generating means.

Preferably, the packet communication program of the present invention lets the mobile packet communication terminal further function as first redundant packet generating means for generating redundant packets by forward error correction codes from data part of aforesaid packets generated by the first packet generating means, and the first packet transmitting means distributes and transmits the packets generated by the first packet generating means and the redundant packets generated by the first redundant packet generating means, to the networks in such a manner that even in a case where the mobile packet communication terminal is no longer able to stay connected to any one of the plurality of networks, the correspondent packet communication terminal can receive different packets in the number equal to or greater than the number of packets generated by the first packet generating means.

Preferably, the packet communication system of the present invention further comprises first redundant packet generating means for generating redundant packets by forward error correction codes from data part of aforesaid packets generated by the first packet generating means of the first mobile packet communication terminal, and the first packet transmitting means of the first mobile packet communication terminal distributes and transmits the packets generated by the first packet generating means and the redundant packets generated by the first redundant packet generating means, to the networks in such a manner that even in a case where the first mobile packet communication terminal is no longer able to stay connected to any one of the plurality of networks, the second packet communication terminal can receive different packets in the number equal to or greater than the number of packets generated by the first packet generating means.

Preferably, the packet communication method of the present invention further comprises a second redundant packet generating step wherein first redundant packet generating means of the first mobile packet communication terminal generates redundant packets by forward error correction codes from data part of aforesaid packets generated by the first packet generating means; and in the second packet transmitting step, the first packet transmitting means of the first mobile packet communication terminal distributes and transmits the packets generated by the first packet generating means and the redundant packets generated by the first redundant packet generating means, to the networks in such a manner that even in a case where the first mobile packet communication terminal is no longer able to stay connected to any one of the plurality of networks, the second packet communication terminal can receive different packets in the number equal to or greater than the number of packets generated by the first packet generating means.

According to these aspects of the invention, the first mobile packet communication terminal makes the first redundant packet generating means generate redundant packets by forward error correction codes from data part of packets. Then the first packet transmitting means distributes and transmits the above redundant packets and the packets generated by the first packet generating means, to the networks to which the first mobile packet communication terminal can be connected. This distribution is carried out in such a manner that even if the first mobile packet communication terminal becomes no longer able to stay connected to any one of the above networks, the second packet communication terminal can receive different packets in the number equal to or greater than the number of packets generated by the first packet generating means. Therefore, even if the first mobile packet communication terminal becomes no longer able to stay connected to one of the above networks, the second packet communication terminal can receive packets in the number permitting recovery of the above data. As a result, the second packet communication terminal can receive the packets transmitted from the first mobile packet communication terminal, without delay.

### BRIEF DESCRIPTION OF THE DRAWINGS

Fig. 1 is a diagram showing a configuration of packet communication system 1.
Fig. 2 is a block diagram showing a functional configuration of a packet communication terminal.
Fig. 3 is a diagram showing a configuration of a packet used in packet communication according to an embodiment.
Fig. 4 is a diagram showing data stored in data part of a packet for notifying a correspondent packet communication terminal of a network address.
Fig. 5A is a diagram showing data generated from audio-video data.
Fig. 5B is a diagram showing divisional data generated from the data shown in Fig. 5A.
Fig. 5C is a diagram showing redundant data.
Fig. 5D is a diagram showing packets generated by adding an MMSP header to each of the divisional data and redundant data.
Fig. 5E is a diagram showing packets generated by adding an TP header to each of the packets shown in Fig. 5D.
Fig. 6 is a block diagram showing a functional configuration of packet communication terminal 30.
Fig. 7 is a sequence diagram associated with notification of network addresses during soft handover.
Fig. 8 is a sequence diagram associated with notification of network addresses during soft handover.
Fig. 9 is a flowchart of an ADD_ADDRESS message sending process.
Fig. 10 is a flowchart of a DELETE_ADDRESS message sending process.
Fig. 11 is a flowchart of a GOOD_ADDRESS message sending process.
Fig. 12 is a flowchart of a process executed by a packet communication terminal in response to a received ADD_ADDRESS message.
Fig. 13 is a flowchart of a process executed by a packet communication terminal in response to a DELETE_ADDRESS message.
Fig. 14 is a flowchart of a process executed by a packet communication terminal in response to a received GOOD_ADDRESS message.
Fig. 15 is a flowchart of processing for a packet communication terminal to transmit packets generated from data and for a correspondent packet communication terminal to reconstruct the data.
Fig. 16 is a flowchart of processing for a packet communication terminal to transmit packets generated from data and for a correspondent packet communication terminal to reconstruct the data.
Fig. 17 is a diagram showing a module configuration of a packet communication program.
Fig. 18 is a diagram showing a module configuration of a packet communication program.

### DESCRIPTION OF THE PREFERRED EMBODIMENTS

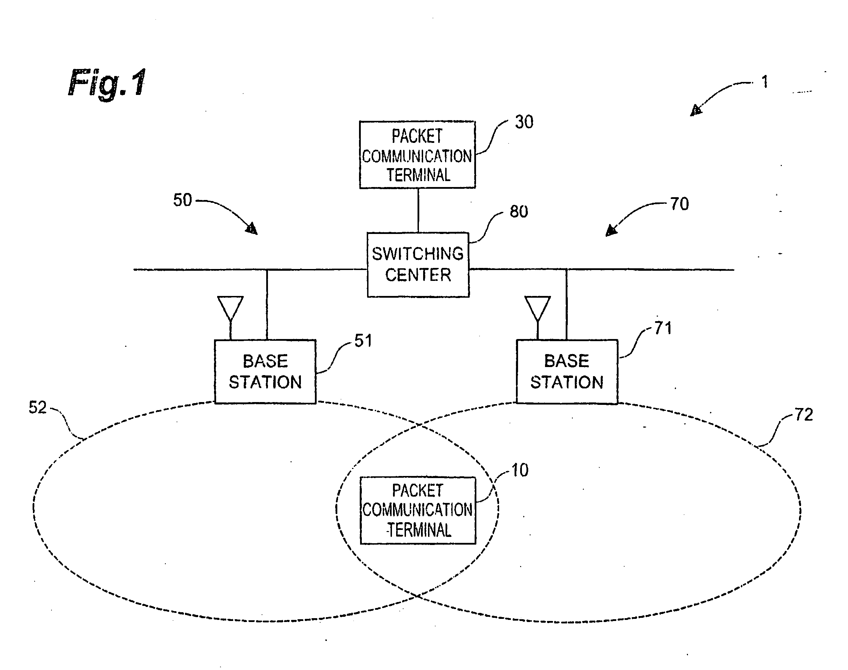

Packet communication system 1 according to an embodiment of the present invention will be described below with reference to the accompanying drawings. Fig. 1 is a diagram showing the configuration of packet communication system 1. Packet communication system 1 according to the present embodiment is comprised of packet communication terminal (first packet communication terminal) 10, packet communication terminal (second packet communication terminal) 30, network 50 with base station 51, network 70 with base station 71, and switching center 80.

Network 50 is a network having a plurality of base stations including base station 51, and the base station 51 is connected through a link to switching center 80. Network 70 is a network having a plurality of base stations including base station 71, and is connected through a link to switching center 80.

Each of base station 51 and base station 71 is wirelessly connected to packet communication terminal 10 present in the range of communication area 52 and communication area 72, and operates to transmit and receive packets to and from packet communication terminal 10.

Switching center 80 is comprised of a router or the like and implements relaying in packet communication between packet communication terminal 30 and packet communication terminal 10.

Packet communication terminal 10 will be described below. Packet communication terminal 10 is a mobile packet communication terminal carried by a user like the mobile communication terminals, cell phones, and so on. Packet communication terminal 10 is physically equipped with an input device such as push buttons, a display unit such as a display device, a CPU (central processing unit), a storage device such as a memory, a communication device, and so on.

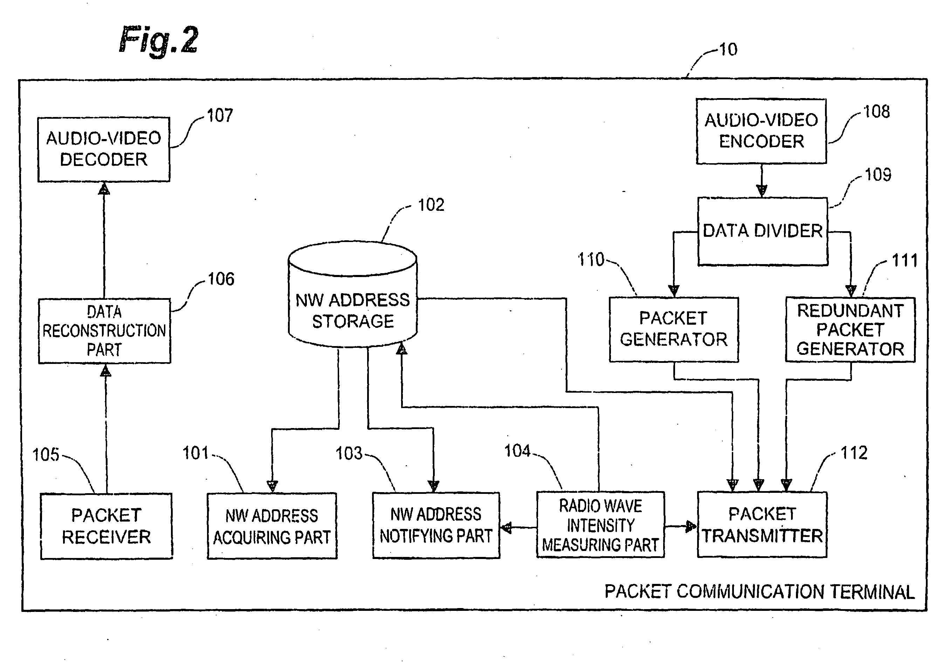

The functional configuration of packet communication terminal 10 will be described below. Fig. 2 is a block diagram showing the functional configuration of packet communication terminal 10. Packet communication terminal. 10 is functionally comprised of network address acquiring part (network address acquiring means) 101, network address storage (network address storing means) 102, network address notifying part (network address notifying means, ineffective network address notifying means, effective network address notifying means, and communication state notifying means) 103, radio wave intensity measuring part (radio wave intensity measuring means) 104, packer receiver (first packet receiving means) 105, data reconstruction part 106, audio-video decoder 107, audio-video encoder 108, data dividing part 109, packet generator (first packet generating means) 110, redundant racket generator (first redundant' packet generating means) 111, and packet transmitter (first packet transmitting means) 112. Each of these components will be described below in detail.

The network address acquiring part 101 is configured as follows. Packet communication terminal 10 detects a network to which is can be connected at its current location. Then the network address acquiring part 101 acquires a network address assigned by the detected network and makes the network address storage 102 store the network address. For example, in the case where packet communication terminal 10 is located in communication area 52 of base station 51, it acquires a network address assigned to the packet communication terminal 10 by network 50. When packet communication terminal 10 further moves from this location to a location where it is included in both communication area 52 of base station 51 and communication area 72 of base station 71, the network address acquiring part 101 further acquires another network address from network 70.

Network address storage 102 is a storage part constructed on a memory for memorizing network addresses acquired by network address acquiring part 101. Alternatively, network address storage 102 may be a database constructed on a hard disk.

Network address notifying part 103 notifies correspondent packet communication terminal 30 of a network address acquired by the network address acquiring part 101. For example, in the case where packet communication terminal 10 is located in communication area 52 of base station 51, it notifies packet communication terminal 30 of a network address acquired from network 50 by network address acquiring part 101. When packet communication terminal 10 further moves from this location to a location where it is included in both communication area 52 of base station 51 and communication area 72 of base station 71, the network address notifying part 103 further notifies packet communication terminal 30 of a network address acquired from network 70 by network address acquiring part 101.

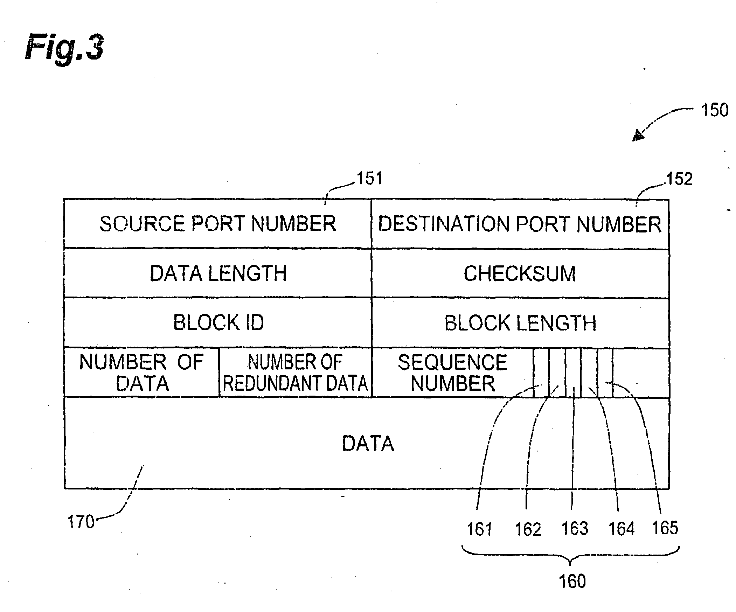

Let us explain herein the configuration of packets used in notification of the network address and transmission of data by packet communication terminal 10 as described above, with reference to Fig. 3. Fig. 3 shows the configuration of packet 150 used in packet communication according to the present embodiment. Fig. 3 shows the configuration of packet 150 consisting of the header of the transport layer, which was newly designed by Inventors of the present invention so as to suit the use in packet communication according to the present embodiment, and data part . In the present specification, the header of the transport layer will be called an "MMSP header." As shown in Fig. 3, the MMSP header is provided with various fields such as source port number field 151, destination port number field 152, flag field 160, and so on. The source port number field 151 and destination port number field 152 are provided for storage of a port number indicating a type of an application protocol. Namely, a numeral indicating a type of an application protocol for the packet communication according to the present embodiment is stored in those fields. Flag field 160 consists of DATA field 161, FEC field 162, GOOD_ADDRESS field 163, ADD_ADDRESS field 164, and DELETE_ADDRESS field 165. The data part 170 subsequent to this MMSP field is provided for storage of data to be transmitted in the form of packets.

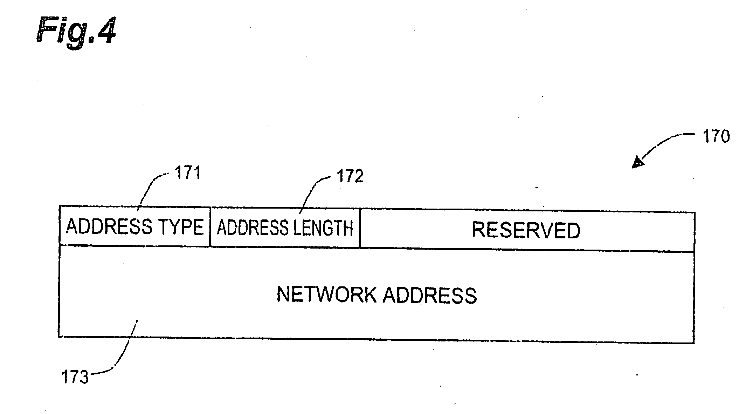

For notifying correspondent packet communication terminal 30 of a network address acquired by network address acquiring part 101, as described above, the network address notifying part 103 puts "1" in ADD_ADDRESS field 164 of the MMSP header. Then the network address notifying part 103 stores data of the format shown in Fig, 4, into data part 170. Fig. 4 shows the data to be stored in data part 170 used in the notification of the network address to the packet communication terminal 30. On the occasion of the aforementioned notification of the network address, as shown in Fig. 4, network address notifying part 103 puts a type of an address in address type field 171. For example, a numeral indicating a network address of IPv4 or IPv6 is scored in address type field 171. A numeral indicating a length of the network address notified of is stored in address length field 172. For example, "32" indicating the address length of 32 bits in the case of IPv4, or "128" indicating the address length of 128 bits in the case of IPv6 is stored in address length field 172. The network address associated with the aforementioned notification is stored in network address field 173.

For notifying packet communication terminal 30 of the network address acquired by the network address acquiring part 101, the network address notifying part 103 generates a packet of the configuration as described above, and transmits the packet to packet communication terminal 30.

When packet communication terminal 10 becomes no longer able to stay connected to a network presently under connection, the network address notifying part 103 puts a network address acquired from the network, in the form of the data of structure shown in Fig. 4, into data part 170 of packet 150, puts "1" in DELETE_ADDRESS field 165 of the MMSP header, and sends the packet to packet communication terminal 30. Packet communication terminal 10 deletes this network address from network address storage 102.

The network address notifying part 103 also performs the following processing on the basis of an instruction from radio wave intensity measuring part 104. Now, referring back to Fig. 2, the radio wave intensity measuring part 104 will be described. The radio wave intensity measuring part 104 measures intensities of radio waves from respective networks to which packet communication terminal 10 is connected. The radio wave intensity measuring part 104 is configured so that when a maximum intensity out of a plurality of intensities measured is not less than a predetermined threshold (first predetermined threshold), it detects a network including a base station having transmitted the radio wave of the maximum intensity. Then it outputs, a network address acquired from the detected network and stored in network address storage 102, to network address notifying part 103. Receiving this output, network address notifying part 103 puts "1" into GOOD_ADDRESS field 163 of the MMSP header, and sends packet 150 with data part 170 storing data consisting of the network address from the radio wave intensity measuring part 104, to packet communication terminal 30. In this case, the radio wave intensity measuring part 104 controls packet transmitter 112 so as to send packets to only the network including the base station having transmitted the radio wave of the maximum intensity.

When all the intensities of the radio waves measured are smaller than a predetermined threshold (second predetermined threshold), the radio wave intensity measuring part 104 outputs this fact to network address notifying part 103. Receiving this output, network address notifying part 103 puts "1" in GOOD_ADDRESS field 163 of the MMSP header, and sends packet 150 of structure with no designated network address in data part 170 to packet communication terminal 30. In this case, the radio wave intensity measuring part 104 controls packet transmitter 112 so as to send packets generated from data to be transmitted to the packet communication terminal 30, to all the networks to which packer, communication terminal 10 is connected. The two predetermined thresholds (the first predetermined threshold and the second predetermined threshold) used by radio wave intensity measuring part 104 may be identical to each other, or may be different values.

Packet receiver 105 receives a packet transmitted from packet communication terminal 30. When a plurality of network addresses are stored in network address storage 102, the packet receiver 105 receives all packets transmitted to these network addresses, as packets addressed to the packet communication terminal 10. Data reconstruction part 106 reconstructs data from the packets received by packet receiver 105. Audio-video decoder 107 decodes the data reconstructed by data reconstruction part 106, into audio and/or video data.

Audio-video encoder 108 encodes audio and/or video data to be transmitted from packet communication terminal 10 to packet communication terminal 30, to generate encoded data. Data dividing part 109 divides this encoded data into divisional data, for packetizing the data generated by audio-video encoder 108.

Packet generator 110 adds an MMSP header to each of the above divisional data to generate packets. At this time, packet generator 110 puts "1" in DATA field 161 of the MMSP header to indicate that this packet is constructed from data.

Redundant packet generator 111 generates redundant data by forward error correction codes from the above divisional data and adds an MMSP header to each of the redundant data to generate redundant packets. At this time, redundant packet generator 111 puts "1" in FEC field 162 of the MMSP header, thereby indicating that this packet contains redundant data by forward error correction codes. Here the redundant packet generator 111 generates redundant packets by the number according to the number of networks to which packet communication terminal 10 is connected. For example, when packet communication terminal 10 is connected to two networks, it generates K redundant packets, corresponding to the number of divisional data, K. The packet communication terminal 10 distributes and transmits the redundant packets generated in this way, and the packets generated by the packet generator 110, to the two networks, and the packet communication terminal 30 can reconstruct the data by receiving either the K packets or redundant packets out of these packets and redundant packets, When the maximum intensity of the radio wave out of those measured by radio wave intensity measuring part 104 is not less than the predetermined threshold, packet communication terminal 10 sends the packets to only the network including the base station having transmitted the radio wave, as described above; in this case, therefore, redundant packet generator 111 generates no redundant packet.

Packet transmitter 112 further adds an IP header to each of the packets generated by packet generator 110 and to each of the redundant packets generated by the redundant packet generator 111. Then the packet transmitter 112 transmits the packets each with the IP header to packet communication terminal 30. In this transmission, where packet transmitter 112 is controlled by radio wave intensity measuring part 104 so as to send packets to the network including the base station having transmitted the radio wave of the maximum intensity as described above, it sends the packets generated bey the packet generator 110, to only the relevant network. On the other hand, when all the intensities of the radio waves measured by the radio wave intensity measuring part 104 is smaller than the predetermined threshold, packet transmitter 112 is controlled so as to send the packets to all the networks to which the packet communication terminal 10 is connected, by an instruction from radio wave intensity measuring part 104; in that case, packet transmitter 112 distributes and transmits the packets and redundant packets each with the IP header as described above, to the networks to which the packet communication terminal 10 is connected. On the occasion of this distribution, packet transmitter 112 transmits the packets while storing network addresses acquired from the respective networks, as source addresses of the IP header, according to the networks to which the above packets and redundant packets are to be transmitted.

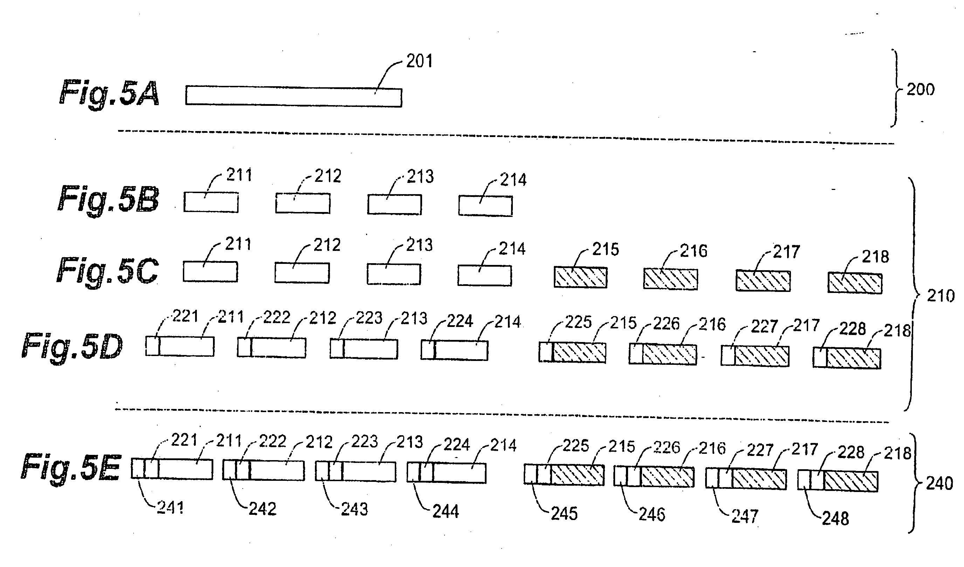

Now the processes executed by the respective parts of audio-video encoder 108, data divider 109, packet generator 110, redundant packet generator 111, and packet transmitter 112 will be described below with reference to Fig. 5A, Fig. 5B, Fig. 5C, Fig. 5D, and Fig. 5E. First, as shown in Fig. 5A, audio-video encoder 108 encodes audio data, video data, or the like to generate data 201 to be transmitted to packet communication terminal 30. This process (reference numeral 200) is a process executed in the application layer level. Next, as shown in Fig. 5B, data divider 109 divides data 201 to generate a plurality of divisional data 211-214. Presented here is an example in which four divisional data 211-214 are generated from data 201. Next, as shown in Fig. 5C, redundant packet generator 111 generates redundant data 215-218 by forward error correction codes from the divisional data 211-214. Presented here is an example in which four redundant data are generated. Then, as shown in Fig. 5D, packet generator 110 and redundant packet generator 111 add MMSP headers 221-223 to divisional data 211-214 and to redundant data 215-218, respectively. The processes (reference numeral 210) shown in Figs. 5B, is and 5D are processes each executed in the transport layer level. Thereafter, as shown in Fig. 5E, packet transmitter 112 adds IP headers 241-248 to the respective packets with the MMSP headers and then sends these packets with the IP headers to networks. This process (reference numeral 240) shown in Fig. 5E is a process executed in the network layer level.

Described next is packet communication terminal 30 as a correspondent to packet communication terminal 10. Packet communication terminal 30 is a packet communication terminal capable of performing packet communication like the personal computers. In the present embodiment, the packet communication terminal 30, different from packet communication terminal 10, is not based on the premise of migration and is connected to one network. The packet communication terminal 30 can also be a mobile packet communication terminal like the mobile communication terminals and others if it is comprised of the after-described components of packer communication terminal 30 and the aforementioned functional components of packet communication terminal 10.

The packet communication terminal 30 is physically comprised of a CPU (central processing unit), a storage device such as a memory, a storage device such as a hard disk, an input device such as a keyboard and a mouse, a display device such as a display unit, a communication device, and so on.

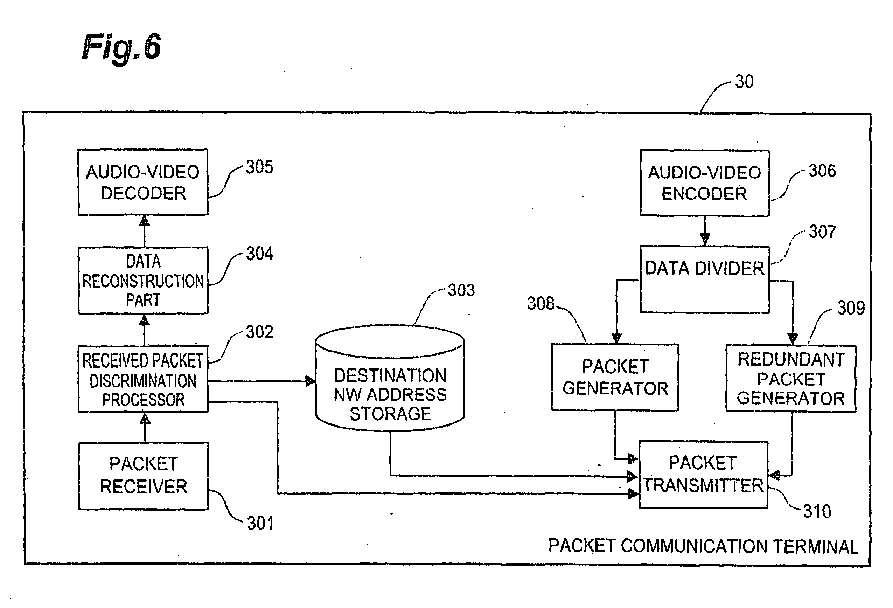

Fig. 6 is a block diagram showing the functional configuration of packet communication terminal 30. The packet communication terminal 30, as shown in Fig. 6, is functionally comprised of packet receiver (second packet receiving means) 301, received packet discrimination processor 302, destination network address storage (destination network address storing means) 303, data reconstruction part 304, audio-video decoder 305, audio-video encoder 306, data divider 307, packet generator (second packet generating means) 308, redundant packet generator (second redundant packet generating means) 309, and packet transmitter (second packet transmitting means) 310. Each of the components will be described below in detail.

Packet receiver 301 receives a packet transmitted from correspondent packet communication terminal 10 and outputs it to received packet discrimination processor 302.

Receives packet discrimination processor 302 receives the packet from packet receiver 301. Then it performs the following processing with reference to flag field 160 in the MMSP header of this packet. When "1" is stored in DATE field 161 of the flag field 160, received packet discrimination processor 302 determines that this packet constitutes part of data transmitted from packet communication terminal 10, and outputs this packet to data reconstruction part 304. When "1" is stored in FEC field 162, received packet discrimination processor 302 determines that this packet is one generated from redundant data, and outputs this packet to data reconstruction part 304. When "1" is stored with reference to GOOD_ADDRESS field 163, received packet discrimination processor 302 refers to data part 170 and determines whether a network address is stored in its network address field 173. When the result of this determination is that an address is stored in network address field 173, received packet discrimination processor 302 controls packet transmitter 310 so as to transmit packets to only the stored network address. On the other hand, when no network address is designated in network address field 173, received packet discrimination processor 302 controls packet transmitter 310 so as to transmit packets to a plurality of destination network addresses stored in destination network address storage 303. When "1" is scored in ADD_ADDRESS field 164, received packet discrimination processor 302 makes destination network address storage 303 store a network address stored in network address field 173 of data part 170, as a destination network address. When "1" is stored in DELETE ADDRESS field 165, received packet discrimination processor 302 deletes a destination network address equivalent to a network address stored in network address field 173 of data part 170, from destination network address storage 303.

Destination network address storage 303 stores a network address notified of by packet communication terminal 10, as a destination network address. Destination network address storage 303 may memorize a list of destination network redresses on a memory or may memorize a list of destination network addresses while constructing a database on a hard disk, for example.

The data reconstruction part 304, audio-video decoder 305, audio-video encoder 306, data divider 307, and packet generator 308 have the same functions as those of the data reconstruction part 106, audio-video decoder 107, audio-video encoder 103, data divider 109, and packet generator 110 of the packet communication terminal 10, respectively.

In order to transmit packets to a plurality of destination network addresses stored in destination network address storage 303, redundant packer generator 305 generates redundant data by forward error correction codes from divisional data generated through division of data by data divider 307, and adds the MMSP headers to the redundant data to generate packets. At this time, redundant packet generator 309 puts "1" in the FEC field 162 of the MMSP header of each packet, thereby indicating that this packer contains redundant data by forward error correction codes. Here the redundant packet generator 111 generates redundant packets by the number according to the number of destination network addresses. For example, in the case where packet communication terminal 30 transmits packets to two destination network addresses, it generates K redundant packets, corresponding to the number of divisional data, K. The packet communication terminal 30 distributes and transmits the redundant packers generated in this way and the packets generated by packet generator 308, to the two destination network addresses, whereby packet communication terminal 10 becomes able to reconstruct the data by receiving either the K packets or redundant packets out of these packets and redundant packets. In the case where the packet communication terminal 30 receives from packet communication terminal 10 a packet in which "1" is stored in GCOD_ADDRLSS field 163 and in which a network address is designated in network address field 173 of data part 170 and where received packet discrimination processor 302 controls packet transmitter 310 so as to transmit packets to only this network address, as described above, the redundant packer generator 309 generates no redundant packet.

Packet transmitter 310 transmits a packet to a destination network address stored in destination network address storage 303. In the case where packet communication terminal 30 receives from packet communication terminal 10 a packet in which "1" is stored in GOOD_ADDRESS field 163 and in which a network address is designated in network address field 173 of data part 170 and where received packet discrimination processor 302 controls packet transmitter 310 so as to transmit packets to only this network address, this transmission is carried out so that packet transmitter 310 transmits packets generated by packet generator 308, to only the network address. On the other hand, in tote case where the packet communication terminal 30 receives from packet communication terminal 10 a packet in which "1" is stored in GOOO_ADDRESS field 163 and in which no network address is designated in network address field 173 of data part 170 and where the received packet discrimination processor 302 controls packet transmitter 310 so as to transmit packets to a plurality of destination network addresses stored in destination network address storage 303, packet transmitter 310 distributes and transmits the packets generated by packet generator 308 and the redundant packets generated by redundant packet generator 309, to the plurality of destination network addresses.

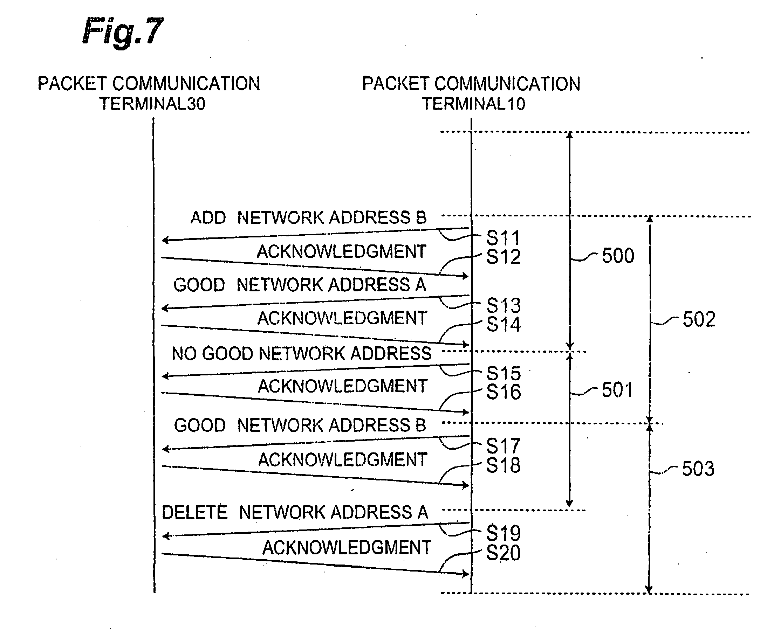

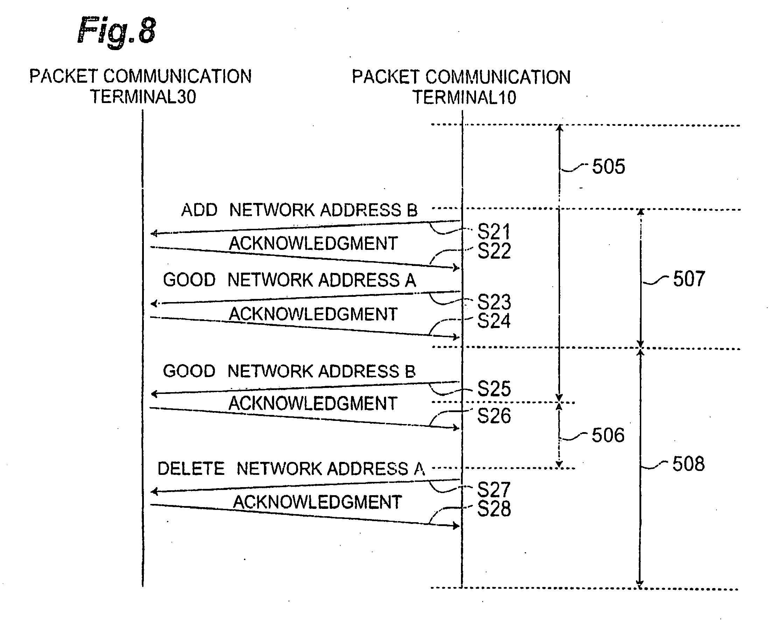

The operation of packet communication system 1 according to the present embodiment will be described below, together with the packet communication method according to the present embodiment. First described with reference to the sequence diagrams of Fig. 7 and Fig. 8 is the processing about the notification of network addresses from packet communication terminal 10 to packet communication terminal 30 carried out in conjunction with soft handover to switch between connected base stations because of migration of packet communication terminal 10 from communication area 52 of base station 51 in network 50 to communication area 72 of base station 71 in network 70.

Fig. 7 shows the processing associated with the soft handover in the case where packet communication terminal 10 receives weak radio waves from the both base stations in the boundary overlapping region of the communication areas of base station 51 in network 50 and base station 71 in network 70. As shown in Fig. 7, packer communication terminal 10 is first in a state in which it is present at a location where it can receive the radio wave of high intensity from network 50 and in which it has already notified packet communication terminal 30 of network address acquired from network 50. Here a period indicated by reference numeral 500 defines a period in which packet communication terminal 10 can receive the strong radio wave from network 50. Let us suppose that packet communication terminal 10 then moves to a location where it can receive the radio waves from both network 50 and network 70. At this time, packet communication terminal 10 acquires network address B from network 70. Then it puts "1" in ADD_ADDRESS field 164 of the MMSP header and puts the network address B in network address field 173 of data part 170 to generate a packet, and thereafter it sends the packet as an ADD_ADDRESS message to packet communication terminal 30 (step S11). Here a period denoted by reference numeral 502 indicates a period in which packet communication terminal 10 receives the weak radio wave from network 70. Packet communication terminal 10 receives an acknowledgment message from packet communication terminal 30 in response to this ADD_ADDRESS message (step S12). This completes the processing about the notification of network address B.

Since packet communication terminal 10 is able to receive The strong radio wave from network 50, it then puts "1" in GOOD_ADDRESS field 163 of the MMSP header and puts network address A acquired from network 50, in network address field 173 of data part 170 to generate a GOOD_ADDRESS message, and transmits it to packet communication terminal 30 (step S13). Packet communication terminal 10 receives an acknowledgment message from packet communication terminal 30 in response to this GOOD_ADDRESS message (step S14). After receiving this GOOD_ADDRESS message, packet communication terminal 30 comes to transmit packets to only the network address A.

Then packet communication terminal 10 further moves to a location where it can receive weak radio waves from both networks 50 and 70. Namely, it migrates into a border region between the two networks. Here a period denoted by reference numeral 501 indicates a period in which packet communication terminal 10 receives the weak radio wave from network 50. Since there is no network, from that packet communication terminal 10 at this location can receive a strong radio wale, it sends a GOOD_ADDRESS message wherein "1" is stored in GOOD_ADDRESS field 163 of the MMSP header and wherein no network address is designated in network address field 173 of data part 170, to packet communication terminal 30 (step S15). Packet communication terminal 10 receives an acknowledgment message from packet communication terminal 30 having received this GOOD_ADDRESS message (step S16). After these processes or steps S15 and S16, packet communication terminal 30 comes to transmit packets to both network addresses A and 5.

Let us suppose that packet communication terminal 10 further moves to a location where it can receive a strong radio wave from network 70. Here a period denoted by reference numeral 503 indicates a period in which packet communication terminal 10 can receive the strong radio wave from network 70. Packet communication terminal 10 having moved to this location transmits a GOOD_ADDRESS message with the network address B designated, to packet communication terminal 30 (step S17). Packet communication terminal 10 receives an acknowledgment message from packet communication terminal 30 in response to this GOOD_ADDRESS message (step S18). After these processes at steps S17 and S18, the packet communication terminal 30 comes to transmit packets to only network address B.

Then packet communication terminal 10 is assumed to move to a location where it can receive no radio wave from network 50 and receive the strong radio wave from only network 70. The packet communication terminal 10 having moved to this location sends a DELETE_ADDRESS message wherein, "1" of is stored in DELETE ADDRESS field 165 of the MMSP header and wherein network address A is stored in network address field 173 of data part 170, to packet communication terminal 30 (step S19). Packet communication terminal 10 receives an acknowledgment message from packet communication terminal 30 in response to this DELETE_ADDRESS message (step S20). Those processes at step S19 and step S20 result in deleting the destination network address equivalent to the network address A stored in destination network address storage 303 of picket communication terminal 30.

Fig. 8 shows processing associated with soft handover in the case where the boundary overlapping region of the communication areas of base station 51 in network 50 and base station 71 in network 70 includes a region where packet communication terminal 10 can receive strong radio waves from the both base stations. First, let us suppose that packet communication terminal 10 is located in the communication area of base station 51 in network 50 and can receive the strong radio wave from network 50, as shown in Fig. 8. In this case, packet communication terminal 30 of the network address A acquired from network 50. In Fig. 8, a period denoted by reference numeral 505 indicates a period in which packet communication terminal 10 can receive the strong radio wave from network 50.

When packet communication terminal 10 further moves to a location where it can also receive a weak radio wave from base station 71 in network 70, it acquires a network address from network 70. A period denoted by reference numeral 507 is a period in which packet communication terminal 10 can receive the weak radio wave from network 70. Then packet communication terminal 10 transmits an ADD_ADDRESS message containing the acquired network address B, to packet communication terminal 30 (step S21). Packet communication terminal 10 receives an acknowledgment message from packet communication terminal 30 in response to this ADD_ADDRESS message (step S22). Through these processes at steps S21 and S22, packet communication terminal 30 comes to transmit packets to the network addresses A and B.

Since packet communication terminal 10 can receive the radio wave of intensity being maximum and not less than the predetermined threshold from base station 51 in network 50, it then transmits a GOOD_ADDRESS message containing the network address A, to packet communication terminal 30 (step S23). Packet communication terminal 10 receives an acknowledgment message from packet communication terminal 30 in response two this GOOD_ADDRESS message (step S24) . Through these processes at steps S23 and S24, packet communication terminal 30 comes to transmit packets to only the network address A.

Then packet communication terminal 10 moves to a location where it can also receive a strong radio wave from base station 71 in network 70. When the radio wave from base station 71 becomes stronger than that from base station 51 and when the intensity of the radio wave from base station 71 becomes maximum and not less than the predetermined threshold, packet communication terminal 10 transmits a GOOD_ADDRESS message containing the network address B, to packet communication terminal 30 (step S25). Packet communication terminal 10 receives an acknowledgment message from packet communication terminal 30 in response two this GOOD_ADDRESS message (step S26). Through these processes at steps S25 and S26, packet communication terminal 30 comes to transmit packets to only the network address B. A period denoted by reference numeral 508 indicates a period in which packet communication terminal 10 can receive the strong radio wave from base station 71 in network 70.

Then packet communication terminal 10 moves to a location where it can receive a weak radio wave from base station 51 in network 50 and further moves to a location where it can receive no radio wave from base station 51. In this case, packet communication terminal 10 transmits a DELETE_ADDRESS message containing the network address A, to packet communication terminal 30 (step S27). Packet communication terminal 10 receives an acknowledgment message from packet communication terminal 30 in response to this DELETE_ADDRESS message (step S28). Through these processes at steps S27 and S28, packet communication terminal 30 deletes the destination network address equivalent to the network address A, which has been stored in destination network address storage 303. A period denoted by reference, numeral 506 indicates a period in which packet communication terminal 10 can receive the weak radio wave from base station 51.

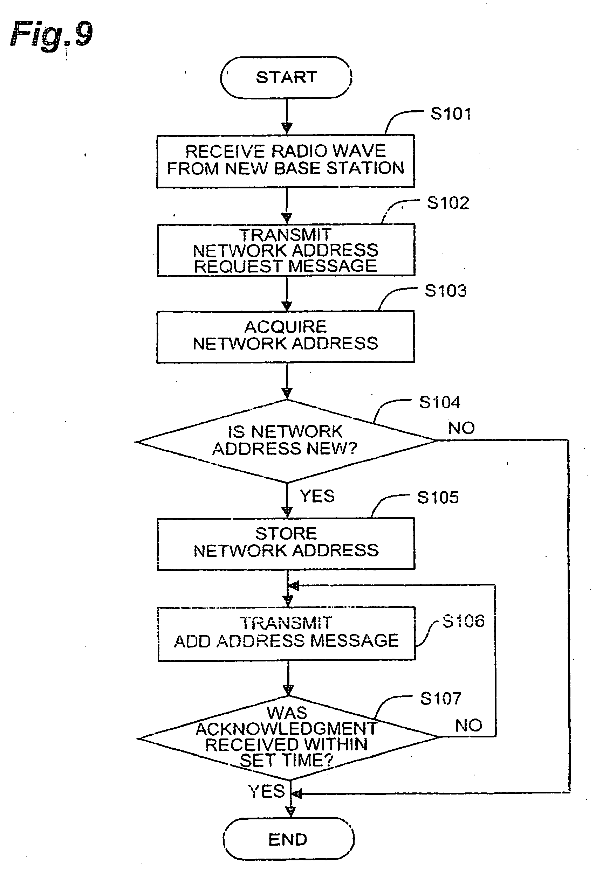

Described next is the notification process of the ADD_ADDRESS message for packet communication terminal 10 to notify packet communication terminal 30 of a network address, Fig. 9 is a flowchart of processing about the notification of the network address from packet communication terminal 10 to packet communication terminal 30. In the processing about the notification of the network address, as shown in Fig. 9, packet communication terminal 10 first receives a radio wave from a new base station (step S101). Then packet communication terminal 10 sends a networks address request message, for acquiring a network address from a network including this new base station (step S102). Packet communication terminal 10 acquires a network address assigned by the network in response to this networks address request message (step S103). Then packet communication terminal 10 determines whether the acquired network address is one previously stored in network address storage 102 (step S104). When the result of this determination is that the above network address is one previously stored in network address storage 102, packet communication terminal 10 terminated this processing. On the other hand, when the above network address is absent in network address storage 102, this network address is stored into network address storage 102 (step S105). Then network address notifying part 1C3 of packet communication terminal 10 sends an ADD_ADDRESS message containing the above network address, to packet communication terminal 30 (step S106). Network address notifying part 103 then determines whether it can receive an acknowledgment message sent in response to this ADD_ADDRESS message from packet communication terminal 30, within a set time (step S107). When the result of this determination is that it failed to receive the acknowledgment message within the set time, network address notifying par 103 again sends the ADD_ADDRESS message (step S106). On the other hand, when the result of the above determination is that the acknowledgment message was received within the set time, the notification process of the network address is terminated.

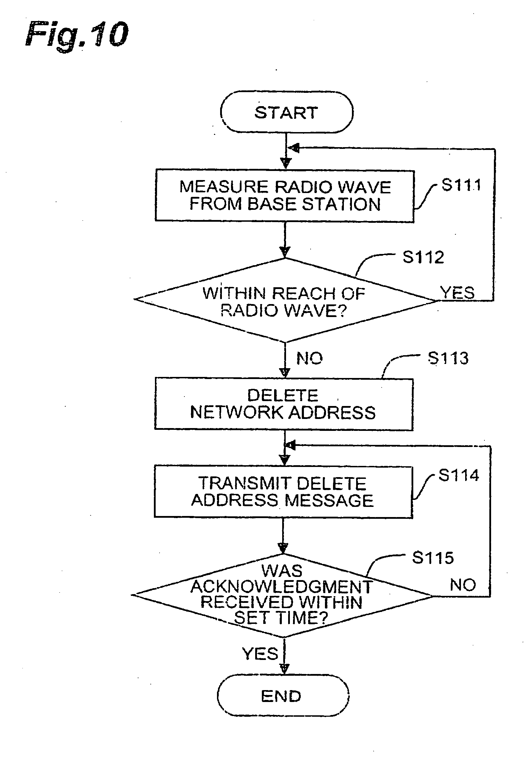

Described next is the notification process of the DELETE_ADDRESS message for packet communication terminal 10 to notify packet communication terminal 30 that packet communication terminal 10 becomes no longer able to receive any radio wave from a base station previously connected, thereby requesting packet communication terminal 30 to delete a network address acquired from a network including the base station. Fig. 10 is a flowchart showing the notification process of the DELETE_ADDRESS message. As shown in Fig. 10, packet communication terminal 10 first measures a radio wave from a base station (step S111). Based on this measurement, packet communication terminal 10 determines whether it is within the reach of the radio wave from the base station (step S112). When the result of this determination is that it is within the reach of the radio wave from the base station, packet communication terminal 10 again performs the measurement of the radio wave from the base stations (step S111). On the other hand, when it is out of the reach of the radio wave from the base station, a network address acquired from a network including the base station is deleted from network address storage 102 (step S113). Then network address notifying part 103 sends a DELETE_ADDRESS message containing the above network address, to packet communication terminal 30 (step S114). Network address notifying part 103 determines whether it can receive an acknowledgment message sent in response to this DELETE_ADDRESS message from packet communication terminal 30, within a set time (step S115). When the result of this determination is that the acknowledgment message was not received within the set time, network address notifying part 103 again sends the DELETE_ADDRESS message (step S114). On the other hand, when the result of the above determination is that the acknowledgment message was received within the set time, the deletion process of the network address is terminated.

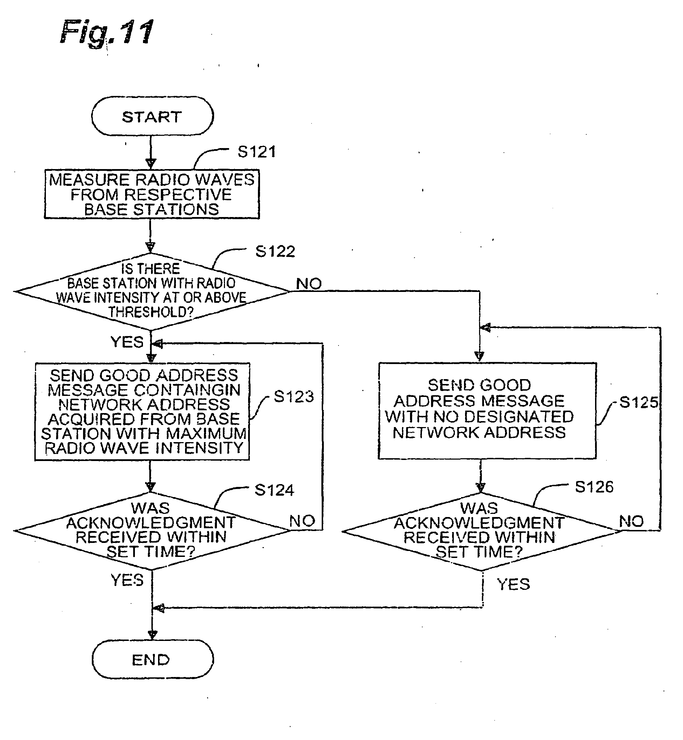

Described next is processing for packet communication terminal 10 to transmit GOOD_ADDRESS message to packet communication terminal 30. Fig. 11 is a flowchart showing the notification process of the GOOD ADDRESS message. As shown in Fig. 11, radio wave intensity measuring part 104 of packet communication terminal 10 measures intensities of radio waves from respective base stations in respective networks to which packet communication terminal 10 is connected (step S121) , Radio wave intensity measuring part 104 determines whether there is a radio wave with an intensity of not less than the predetermined threshold, among the intensities of the radio waves thus measured (step S122). When the result of this determination is that there are radio waves with intensities of not less than the predetermined threshold, network address notifying part 103 sends a GOOD__ADDRESS message containing a network address acquired from a networks including a base station having transmitted the radio wave of the maximum intensity among them, to packet communication terminal 30 (step S123). Network address notifying part 103 determines whether an acknowledgment message to be transmitted in response to this GOOD_ADPRESS message from packet communication terminal 30 can be received within a set time (step S124). When the result of this determination is that the acknowledgment message from packet communication terminal 30 was not received within the set time, network address notifying part 103 again transmits the above GOOD_ADDRESS message (step S123). On the other hand, when the acknowledgment message from packet communication terminal 30 is received within the set time, this processing is germinated. Returning to the determination at step S122, when there is no radio wave with an intensity of not less than the predetermined threshold, network address notifying part 103 sends a GOOD_ADDRESS message with no designated network address to packet communication germinal 30 (step S125). Network address notifying part 103 determines whether an acknowledgment message to be transmitted in response to this GOOD_ADDRESS message from packet communication terminal 30 can be received within a set time (step S126). When the result of this determination is that the acknowledgment message from packet communication terminal 30 was not received within the set time, network address notifying part 103 again sends the above GOOD_ADDRESS message (step S125). On the other hand, when the acknowledgment message from packet communication terminal 30 is received within the set time, this processing is terminated.

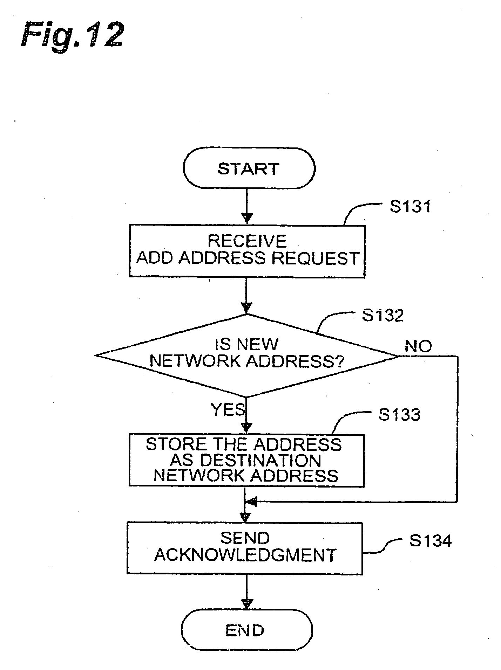

Described next is processing for packet communication terminal 30 to store a destination network address in accordance with an ADD_ADDRESS message from packet communication terminal 10. Fig. 12 is a flowchart of the processing executed by packet communication terminal 30 in accordance with the received ADD_ADDRESS message. As shown in Fig. 12, packet receiver 301 of packet communication terminal 30 receives the ADD_ADDRESS message from the packet communication terminal (step S131). Then received packet discrimination processor 302 determines whether the network address in the ADD_ADDRESS message received by packet receiver 301 is one previously stored in destination network address storage 303 (step S132). When the result, of this determination is that the above network address is absent in destination network address storage 303, received packet discrimination processor 302 makes destination network address storage 303 store this network address as a destination network address (step 3133). On the other hand, when the above network address is one previously stored in destination network address storage 303, no new storage process is carried out, because this network address is already present in destination network address storage 303. For notifying packet communication terminal 10 of completion of the above processing, received packet discrimination processor 302 sends an acknowledgment message to packet communication terminal 10 (step S134).

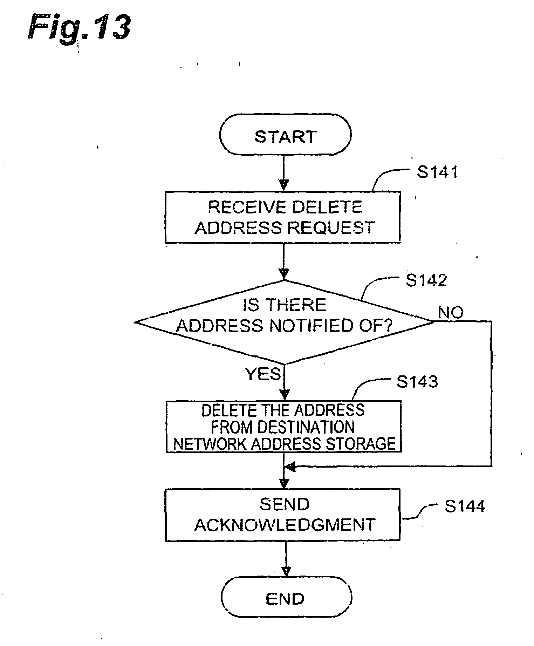

Described next is processing for packet communication terminal 30 to delete a destination network address in response to a DELETE_ADDRESS message sent from packet communication terminal 10. Fig. 13 is a flowchart of the processing carried out by packet communication terminal 30 in response to the received DELETE_ADDRESS message, As shown in Fig. 13, packet receiver 301 of packet communication terminal 30 receives the DELETE ADDRESS message sent from packet communication terminal 10 (step S141). Received packet discrimination processor 302 determines whether a network address in this DELETE_ADDRESS message is one stored as a destination network address in destination network address storage 303 (step S142). When the result of this determination is that the above network address is one stored as a destination network address in destination network address storage 303, this destination network address is deleted from destination network address storage 303 (step S143). On the other hand, when the above network address is not stored as a destination network address in destination network address storage 303, the process of deleting the destination network address is not carried out. For notifying packet communication terminal 10 of completion of the above processing, received packet discrimination processor 302 sends an acknowledgment message to packet communication terminal 10 (step S144).

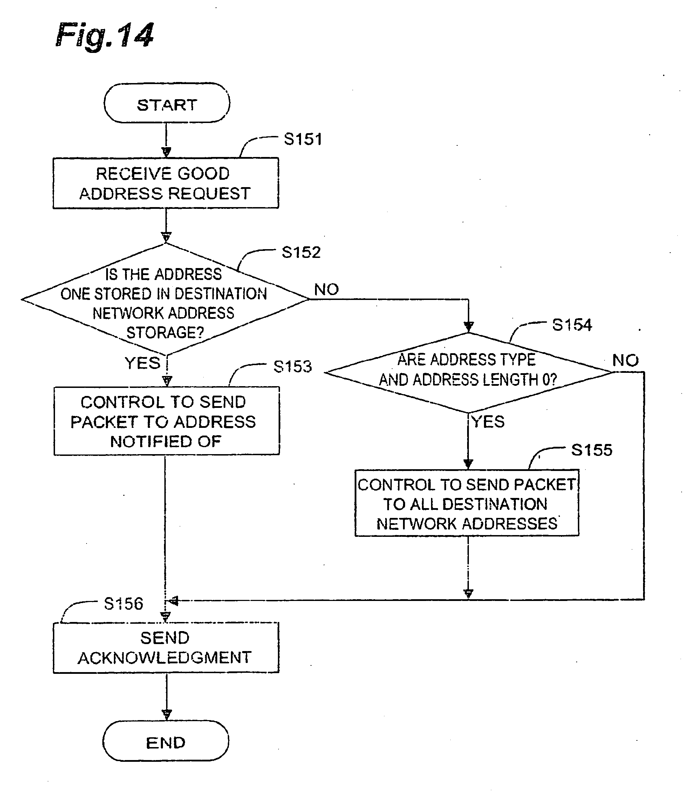

Described next is processing carried out by packet communication terminal 30 in response to a GOOD_ADDRESS message from packet communication terminal 10. Fig. 14 is a flowchart of the processing carried out by packet communication terminal 30 in response to the received GOOD_ADDRESS message. As shown in Fig. 14, packet receiver 301 of packet communication terminal 30 receives the GOOD_ADDRESS message sent from packet communication terminal 10 (step S151). Received packet discrimination processor 302 determines whether a network address in this GOOD_ADDRESS message is one previously stored as a destination network address in destination network address storage 303 (step S152). When the result of this determination is that the above network address is one previously stored as a destination network address in destination network address storage 303, received packet discrimination processor 302 controls packet transmitter 310 so as to transmit packets to only this destination network address (step S153). On the other hand, when the above network address is not stored as a destination network address in destination network address storage 303, received packet discrimination processor 302 determines whether the address type and address length of the above GOOD_ADDRESS message are "0" (step S154) . When the result or this determination is that the address type and address length of the GOOD_ADDRESS message are "0," i.e., when no network address is designated, received packet discrimination processor 302 controls packet transmitter 310 so as to transmit packets to all the destination network addresses stored in destination network address storage 303 (step S155). On the other hand, when the above GOOD_ADDRESS message contains a network address, the message is judged as an abnormal message and the processing is terminated. For notifying packet communication terminal 10 of completion of the above processing, received packet discrimination processor 302 sends an acknowledgment message to packet communication terminal 10 (step S156).

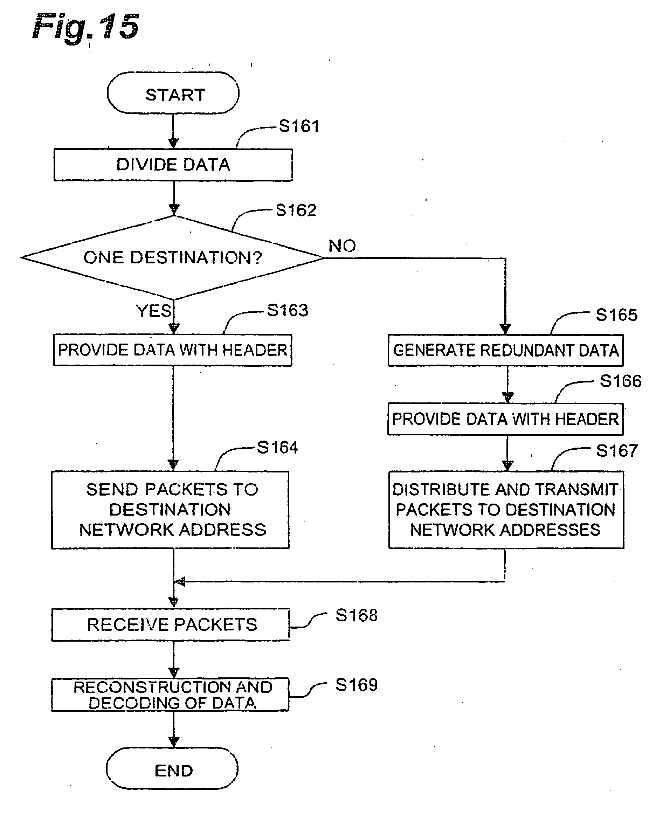

Described next is processing for packet communication terminal 30 to send packets generated from data to packet communication terminal 10 and for packet communication terminal 10 to reconstruct the data. Fig. 15 is a flowchart of the processing for packet communication terminal 30 to transmit packets, generated from data and for packet communication terminal 10 to reconstruct the data. As shown in Fig. 15, data divider 307 divides data encoded by audio-video encoder 306 of packet communication terminal 30, to generate divisional data (step S161). It is then determined whether packet transmitter 310 is controlled to transmit packets to only one destination network address (step S162). When the result of this determination is that packet transmitter 310 is controlled to transmit packets to only one destination network address, packet generator 308 adds the MMSP header to each of the above divisional data to generate packets (step S163). Then packet transmitter 310 adds the IP header to each of the packers generated by packet generator 308, puts the above destination network address in the IP header, and sends the packets to the destination network address (step S164). Returning to the determination at step S162, when packet transmitted 310 is controlled to distribute and transmit packets to a plurality of destination network addresses stored in destination network address storage 303, redundant packet generator 309 first generates redundant data from the above divisional data (step S165). Then packet generator 308 generates packets with the MMSP headers added to the above divisional data and redundant packet generator 309 generates packets with the MMSP headers added to the redundant data (step S166). For distributing and transmitting the above packets to the plurality of destination network addresses stored in the destination network address storage 303, packet transmitter 310 further adds the IP header to each packet, and distributes and stores these destination network addresses into the IP headers of the respective packets. Packet transmitter 310 transmits each packet to the destination network address stored in the IP header of each packet (step S167). Packet receiver 105 of packet communication terminal 10 receives packets transmitted in this way from packet communication terminal 30 (step S168). Data reconstruction part 106 reconstructs the data from the packets received by packet receiver 105 and thereafter audio-video decoder 107 decodes the data (step S169).

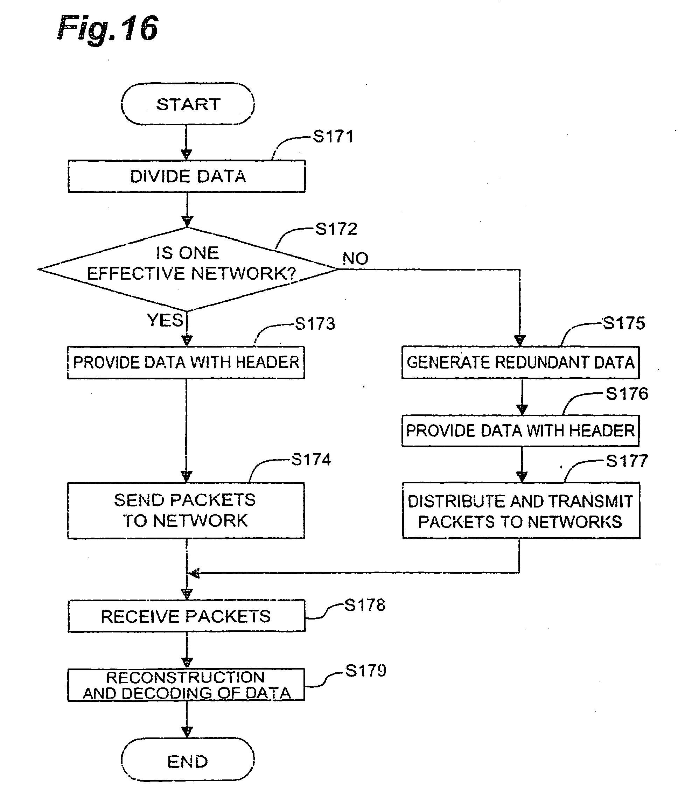

Described next is processing for packet communication terminal 10 to transmit packets generated from data to packet communication terminal 30 and for packet communication terminal 30 to reconstruct data. Fig. 16 is a flowchart of the processing for packet communication terminal 10 to transmit packets generated from data and for packet communication terminal 30 to reconstruct the data. As shown in Fig. 16, data divider 109 divides data encoded by audio-video encoder 108 or packet communication terminal 10 to generate divisional data (step S171) . It is then determined whether packet transmitter 112 is controlled so as to send packets to only one network (step S172), When the result of this determination is that packet transmitter 112 is controlled to transmit packets to only one network, packet generator 110 adds the MMSP header to each of the above divisional data to generate packets (step S173). For transmitting the packets to the above network, packet transmitter 112 then adds the IP header to each packet generated by packet generator 110, and puts the network address acquired from the above network, as a source network address into each IP header. Packet transmitter 112 transmits the packets thus generated, to the above network (step S174). Returning to the determination at step S172, when packet transmitter 112 is controlled so as to distribute and transmit packets to a plurality of networks, redundant packet generator 111 first generates redundant data from the above divisional data (step S175). Then packet generator 110 generates packets with the MMSP headers added to the above divisional data, and redundant packet generator 111 generates packets with the MMSP headers added to the redundant data (step S176). For distributing and transmitting the above packets to the plurality of networks to which packet communication terminal 10 is connected, packet transmitter 112 then further adds the IP header to each packet, and distributes and stores a plurality of network addresses stored in network address storage 102, into the IP headers of the respective packets. Packet transmitter 112 sends each packet to a network whose network address stored in the IP header thereof was acquired (step S177). Packet receiver 301 of packet communication terminal 30 receivers packets sent in this way from packet communication terminal 10 (step S178). When received packet discrimination processor 3031 determination that "1" is stored in DATA field 161 of the MMSP header of each packet received by packer receiver 301, the packet is delivered to data reconstruction part 304. Then the data reconstruction part 304 reconstructs the data and thereafter audio-video decoder 305 decodes the data (step S179).

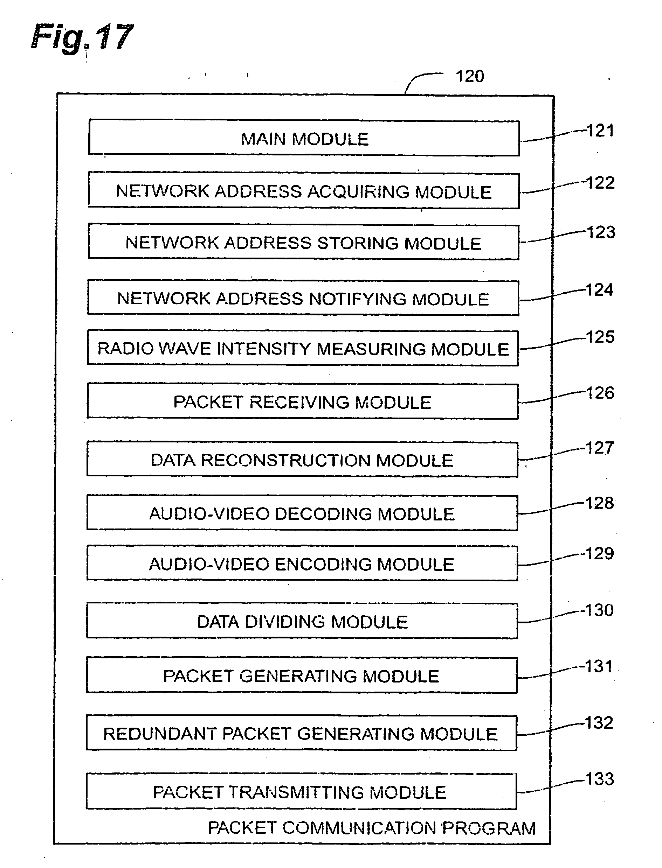

Described next is packet communication program 120 for letting a packet communication terminal function as the aforementioned packet communication terminal 10. Fig. 17 shows the module configuration of packet communication program 120. As shown in Fig. 17, packet communication program 120 comprises main module 121 in charge of processing, network address acquiring module 122, network address storing module 123, network address notifying module 124, radio wave intensity measuring module 125, packet receiving module 126, data reconstruction module 127, audio-video decoding module 128, audio-video encoding module 129, data dividing module 130, packet generating module 131, redundant packet generating module 132, and packet transmitting module 133. Here the functions of letting the packet communication terminal substantialize the operations of network address acquiring module 122, network address storing module 123, network address notifying module 124, radio wave intensity measuring module 125, packet receiving module 126, data reconstruction nodule 127, audio-video decoding module 128, audio-video encoding module 129, data dividing module 130, packet generating module 131, redundant packet generating module 132, and packet transmitting module 133 are similar to the respective functions of network address acquiring part 101, network address storage 102, network address notifying part 103, radio wave intensity measuring part 104, packet receiver 105, data reconstruction part 106, audio-video decoder 107, audio-video encoder 108, data divider 109, packet generator 110, redundant packet generator 111, and packet transmitter 112.

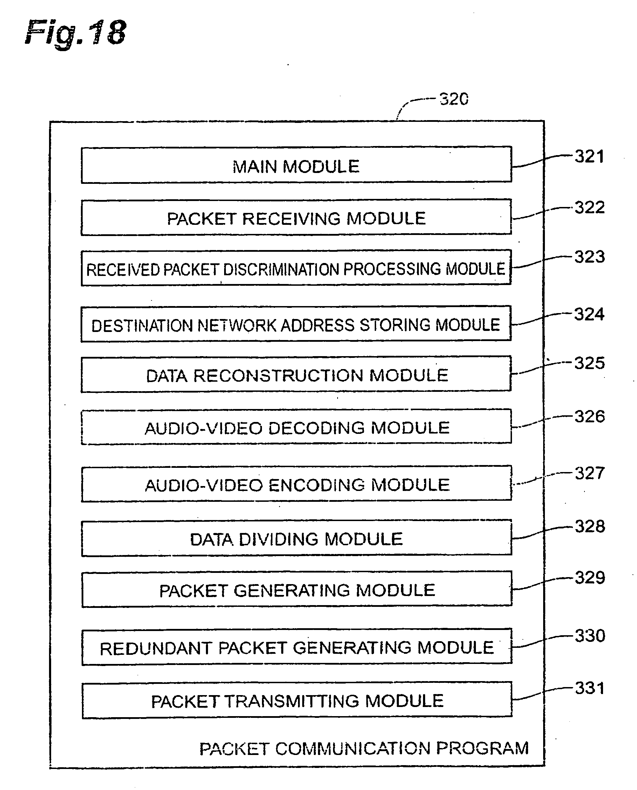

Described next is packet communication program 320 for letting a packet communication terminal function as the aforementioned packet communication terminal 30. Fig. 18 shows the module configuration of packet communication program 320. As shown in Fig. 18, packet communication program 320 comprises main module 321 in charge of processing, packet receiving module 322, received packet discrimination processing module 323, destination network address storing module 324, data reconstruction module 325, audio-video decoding module 326, audio-video encoding module 327, data dividing module 328, packet generating module 329, redundant packet generating module 330, and packet transmitting module 331. Here the functions of letting the packet communication terminal executed the operations of packet receiving module 322, received pocket discrimination processing module 323, destination network address storing module 324, data reconstruction module 325, audio-video decoding module 326, audio-video encoding module 327, data dividing module 328, packet generating module 329, redundant packet generating module 330, and packet transmitting module 331 are similar to the respective functions of packet receiver 301, received packet discrimination processor 302, destination network address storage 303, data reconstruction part 304, audio-video decoder 305, audio-video encoder 306, data divider 307, packet generator 308, redundant packet generator 309, and packet transmitter 310.

Packet communication program 120 and packet communication program 320 are provided, for example, by recording media such as CD-ROM, DVD, ROM, etc., or by semiconductor memories. Packet communication program 120 and packet communication program 320 may be those provided as computer data signals over a carrier wave through a network.

The action and effect of packet communication system 1 according to the present embodiment will be described below, in packet communication system 1 of the present embodiment, when packet communication terminal 10 is present at the location where communication areas of two or more networks overlap each other, and is connectible to each of the network, networks address acquiring part 101 acquires network addresses from the respective networks. Network address storage 102 stores these network addresses and network address notifying part 103 notifies packet communication terminal 30 of these network addresses. In packet communication terminal 30, destination network address storage 303 stores the network addresses thus notified of, as respective destination network addresses. Then packet transmitter 310 of packet communication terminal 30 distributes and transmits packets generated by packet generator 308 and packets generated by redundant packet generator 309, to the destination network addresses stored in destination network address storage 303. Packet receiver 105 of packet communication terminal 10 receives packet transmitted to the respective destination network addresses in this way. When the system is constructed in this configuration wherein when packet communication terminal 10 is located at the position where communication areas of networks overlap each other, and is connectible to a plurality of networks, packet communication terminal 30 transmits packets to the network addresses acquired from the respective networks, even if packet communication terminal 10 further moves into a state where packet communication terminal 10 is no longer able to stay connected to any one of the networks, it can receive packets transmitted through the other networks from packet communication terminal 30, without delay. The packets transmitted from packet communication terminal 30 to packet communication terminal 10 encompass packets consisting of divisional data generated from data to be transmitted, and packets consisting of redundant data generated by forward error correction codes from the divisional data. Packet transmitter 310 distributes and transmits these packets to the destination network addresses notified of by packet communication terminal 10. This distribution is implemented in such a manner that even of any one of the destination network addresses becomes ineffective, packet communication terminal 10 can receive different packets in the number equal to or greater than the number of packets generated by packet generator 308. Therefore, packet communication terminal 10 can receive packets in the number permitting recovery of the above data. As a result, packet communication terminal 10 can receive the packets transmitted from packet communication terminal 30, without delay.

In packet communication terminal 10, network address notifying part 103 sends a DELETE_ADDRESS message containing a network address acquired from a network to which packet communication terminal 10 is no longer able to stay connected, to packet communication terminal 30. Received packet discrimination processor 302 of packet communication terminal 30 disables a destination, network address corresponding to the network address included in the above DELETE_ADDRESS message. Namely, it deletes the above destination network address stored in destination network address storage 303. Therefore, it is feasible to cut down the waste that packet communication terminal 30 transmits packets to a network to which packet communication terminal 10 is unable to stay connected.

When packet communication terminal 10 is connected to multiple networks, radio wave intensity measuring part 104 measures intensities of radio waves from the respective networks. When the maximum intensity out of the intensities measured is not less than the predetermined threshold, network address notifying part 103 then spends a GOOD_ADDRESS message containing a network address acquired from the network having transmitted the radio wave of the maximum intensity, to packet communication terminal 30. In packet communication terminal 30, packet transmitter 310 then transmits packets to a destination network address corresponding to the networks address included in this GOOD_ADDRESS message. Namely, in the network transmitting the radio wave of the intensity being not less than the predetermined threshold and being maximum among the plurality of networks, it can be assumed that packet communication terminal 10 is located near a base station belonging to the network and is in a good communication state therewith, and, under a judgment that packet communication terminal 10 is able to stay connected to the network while maintaining this communication state for the time being, packet communication terminal 30 determines the above network address notified of, as a destination network address and sends packets to this destination network address. Therefore, packet communication terminal 10 can receive packets transmitted from packet communication terminal 30, without delay and it is feasible to cut down the waste of transmitting packets through all the networks to which packet communication terminal 10 can be connected.

In packet communication terminal 10, when intensities of radio waves from multiple networks measured by radio wave intensity measuring part 104 are smaller than the predetermined threshold, network address notifying part 103 sends a GOOD_ADDRESS message containing no designated network address, to packet communication terminal 30. Packet communication terminal 30 acknowledges that no network address is designated in the GOOD_ADDRESS message, and then transmits packets to each of the plurality of destination network addresses stored in destination, network address storage 303. Namely, when the intensities of the radio waves from the respective networks measured by radio wave intensity measuring part 104 are smaller than the predetermined threshold, the packet communication terminal 10 is determined to be located in a border region among the communication areas of the respective networks, and packet communication terminal 30 transmits packets to the network addresses acquired from the respective networks by packet communication terminal. 10, as destination network addresses. In this configuration, even if packet communication terminal 10 moves from the boundary region of the networks into a state where it is no longer able to stay connected to any one of the networks, packet communication terminal 10 can receive packets through the other networks from packet communication terminal 30, without delay.

When packet communication terminal 10 is connectible to a plurality of networks, network address notifying part 103 transmits network addresses acquired from the respective networks, to packet communication terminal 30. Destination network address storage 303 of packet communication terminal 30 stores the network addresses transmitted from packet communication terminal 10, as respective destination network addresses. Thereafter, packet transmitter 112 of packet communication terminal 10 distributes and transmits packets generated by packet generator 110 and packets generated by redundant packet generator 111, to the networks to which packet communication terminal 10 can be connected. Packet receiver 301 of packet communication terminal 30 receives packets transmitted through the respective networks from packet communication terminal 10. For example, in the case where packet communication terminal 10 is present at a location where communication areas of multiple networks overlap each other, and is connectible to the multiple networks, packet communication terminal 10 distributes and transmits packets to the connectible networks as described above; whereby, even if packet communication terminal 10 further moves into a state where it is no longer able to stay connected to any one of the networks, the packets transmitter from packet communication terminal 10 can be received through the other networks by packet communication terminal 30, without delay. The packets transmitted from packet communication terminal 10 to packet communication terminal 30 encompass packets consisting of divisional data generated from data to be transmitted, and packets consisting of redundant data generated by forward error correction codes from the divisional data. Packet transmitter 112 distributes and transmits these packets to the plurality of networks to which packet communication terminal 10 can be connected. This distribution is implemented in such a manner that even if packet communication terminal 10 becomes no longer able to stay connected to any one of the networks, packet communication terminal 30 can receive different packets in the number equal to or greater than the number of packets generated by packet generator 110. Therefore, packet communication terminal 30 can receive packets in the number permitting recovery of the above data. As a result, packet communication terminal 30 can receive packets transmitted from packet communication terminal 10, without delay.

The present invention can be modified in various ways without having to be limited to the above-stated embodiments. For example, in the embodiments, when packets were transmitted through multiple networks, the packets were transmitted while distributing the packets with the headers added to the divisional data obtained by dividing data to be transmitted, and the packets with the headers added to the redundant data generated from the divisional data, to the networks. Instead thereof, the packets with the headers added to the divisional data obtained by dividing data to be transmitted may be transmitted through all the networks to which the packet communication terminal can be connected. In this case, even if the packet communication terminal becomes no longer able to stay connected to any one of multiple networks to which the packet communication terminal is connected, the correspondent packet communication terminal can receive the packets transmitted through the other networks, without delay.

## Claims

1. A mobile packet communication terminal (10) for packet communication comprising:
network address acquiring means (101) for acquiring a network address of the mobile packet communication terminal (10) from a network (50, 70) to which the mobile packet communication terminal (10) can be connected;
network address storing means (102) for storing the network address acquired by the network address acquiring means (101);
network address notifying means (103) for notifying a correspondent packet communication terminal (30) of the network address stored in the network address storing means (102); and
first packet receiving means (105) for receiving a packet sent from the correspondent packet communication terminal (30) to the network address;
wherein when there exist a plurality of networks (50, 70) to which the mobile packet communication terminal (10) can be connected, the network address acquiring means (101) acquires a plurality of said network addresses from the respective networks (50, 70);
wherein the network address storing means (102) stores the plurality of network addresses;
wherein the network address notifying means (103) notifies the correspondent packet communication terminal (30) of the plurality of network addresses; and
wherein the first packet receiving means (105) receives packets generated from identical data and sent from the correspondent packet communication terminal (30) to the respective network addresses.

2. The mobile packet communication terminal (10) according to Claim 1, further comprising ineffective network address notifying means (103) for notifying the correspondent packet communication terminal (30) of the network address acquired by the network address acquiring means (101) from the network (50, 70) to which the mobile packet communication terminal (10) is no longer able to stay connected, and information that said network address is made ineffective.

3. The mobile packet communication terminal (10) according to Claim 1 or 2, further comprising:
radio wave intensity measuring means (104) for, when a plurality of said network addresses are stored in the network address storing means (102), measuring intensities of radio waves from the respective networks (50, 70) from which the respective network addresses were acquired; and
effective network address notifying means (103) for, when a maximum intensity out of the intensities measured by the radio wave intensity measuring means (104) is not less than a first predetermined threshold, notifying the correspondent packet communication terminal (30) of the network address acquired by the network address acquiring means (101) from the network having transmitted the radio wave of the maximum intensity, and information that a communication state with said network is good.

4. The mobile packet communication terminal (10) according to Claim 3, further comprising communication state notifying means (103) for, when all the intensities of the radio waves from the plurality of networks (50, 70) measured by the radio wave intensity measuring means (104) are smaller than a second predetermined threshold, notifying the correspondent packet communication terminal (30) of information that there is no network from that the mobile packet communication terminal (10) can receive a radio wave of not less than the second predetermined threshold.

5. A mobile packet communication terminal (10) for packet communication comprising:
network address acquiring means (101) for acquiring a network address of the mobile packet communication terminal (10) from a network (50, 70) to which the mobile packet communication terminal (10) can be connected;
network address storing means (102) for storing the network address acquired by the network address acquiring means (101);
network address notifying means (103) for notifying a correspondent packet communication terminal (30) of the network address stored in the network address storing means (102);
first packet generating means (110) for generating a packet from data to be transmitted to the correspondent packet communication terminal (30); and
first packet transmitting means (112) for providing the packet with the network address stored in the network address storing means (102) and for transmitting the packet to the correspondent packet communication terminal (30);
wherein when there exist a plurality of networks (50, 70) to which the mobile packet communication terminal (10) can be connected, the network address acquiring means (101) acquires a plurality of said network addresses from the respective networks (50, 70);
wherein the network address storing means (102) stores the plurality of network addresses;
wherein the network address notifying means (103) notifies the correspondent packet communication terminal (30) of the plurality of network addresses; and
wherein when a plurality of said network addresses are stored in the network address storing means (102), the first packet transmitting means (112) provides said packets generated from identical data by the first packet generating means (110), with the network addresses acquired from the respective networks (50, 70) and transmits the packets to the respective networks (50, 70).

6. The mobile packet communication terminal (10) according to Claim 5, wherein when a plurality of said network addresses are stored in the network address storing means (102), said packets transmitted to the respective networks (50, 70) by the first packet transmitting means (112) are packets identical to each other.

7. The mobile packet communication terminal (10) according to Claim 5, further comprising first redundant packet generating means (111) for generating redundant packets by forward error correction codes from data part of said packets generated by the first packet generating means (110),
wherein the first packet transmitting means (112) distributes and transmits the packets generated by the first packet generating means (110) and the redundant packets generated by the first redundant packet generating means (111), to the networks (50, 70) in such a manner that even in a case where the mobile packet communication terminal (10) is no longer able to stay connected to any one of the plurality of networks (50, 70), the correspondent packet communication terminal (30) can receive different packets in the number equal to or greater than the number of packets generated by the first packet generating means (111).

8. A packet communication terminal (30) for packet communication comprising:
destination network address storing means (303) for storing a network address notified of by a correspondent mobile packet communication terminal (10), as a destination network address;
second packet generating means (308) for generating a packet from data to be transmitted to the correspondent mobile packet communication terminal (10); and
second packet transmitting means (310) for transmitting the packet to the correspondent mobile packet communication terminal (10);
wherein when a plurality of said network addresses are notified of by the correspondent mobile packet communication terminal (10), the destination network address storing means (303) stores a plurality of said destination network addresses corresponding to the plurality of network addresses; and
wherein when a plurality of said destination network addresses are stored in the destination network address storing means (303), the second packet transmitting means (310) transmits said packets generated from identical data, to the respective destination network addresses.

9. The packet communication terminal (30) according to Claim 8, wherein when a plurality of said destination network addresses are stored in the destination network address storing means (303), said packets transmitted to the plurality of network addresses by the second packet transmitting means (310) are packets identical to each other.

10. The packet communication terminal (30) according to Claim 9, further comprising second redundant packet generating means (309) for generating redundant packets by forward error correction codes from data part of the packets generated by the second packet generating means (308),
wherein when a plurality of said destination network addresses are stored in the destination network address storing means (303), the second packet transmitting means (310) distributes and transmits the packets generated by the second packet generating means (308) and the redundant packets generated by the second redundant packet generating means (309), to the plurality of destination network addresses in such a manner that even in a case where any one of the destination network addresses becomes ineffective, the correspondent mobile packet communication terminal (10) can receive different packets in the number equal to or greater than the number of packets generated by the second packet generating means (308).

11. The packet communication terminal (30) according to one of Claims 8 to 10, wherein, based on the network address notified of by the correspondent mobile packet communication terminal (10), and information that said network address is made ineffective, the destination network address storing means (303) makes ineffective the destination network address corresponding to said network address.

12. The packet communication terminal (30) according to one of Claims 8 to 11, wherein when a plurality of said destination addresses are stored in the destination address storing means (303), based on the network address notified of by the correspondent mobile packet communication terminal (10), and information that a communication state with the network from which said network address was acquired is good, the second packet transmitting means (310) transmits said packets to the destination network address stored corresponding to the network address in the destination network address storing means (303).

13. The packet communication terminal (30) according to Claim 12, wherein, based on information that there is no network from that the correspondent mobile packet communication terminal (10) can receive a radio wave of not less than a second predetermined threshold, notified of by the correspondent mobile packet communication terminal (10), the second packet transmitting means (310) transmits said packets to the respective destination network addresses stored in the destination network address storing means (303).

14. A packet communication terminal (30) for packet communication comprising:
destination network address storing means (303) for storing a network address notified of by a correspondent mobile packet communication terminal (10), as a destination network address; and
second packet receiving means (301) for receiving a packet transmitted from the correspondent mobile packet communication terminal (10);
wherein when a plurality of said network addresses are notified of by the correspondent mobile packet communication terminal (10), the destination network address storing means (303) stores a plurality of said destination network addresses corresponding to the respective network addresses; and
wherein the second packet receiving means (301) receives a packet transmitted from the correspondent mobile packet communication terminal (10), provided with one of the plurality of destination network addresses, and generated from identical data.

15. A packet communication system (1) for packet communication between a first mobile packet communication terminal (10) according to one of Claims 1 to 4 and a second packet communication terminal (30) according to one of Claims 8 to 13.

16. A packet communication system (1) for packet communication between a first mobile packet communication terminal (10) according to one of Claims 5 to 7 and a second packet communication terminal (30) according to Claim 14.

17. A packet communication method for packet communication between a first mobile packet communication terminal (10) and a second packet communication terminal (30), the packet communication method comprising:
a network address acquiring step wherein network address acquiring means (101) of the first mobile packet communication terminal (10) acquires a network address of the mobile packet communication terminal (10) from a network (50, 70) to which the first mobile packet communication terminal (10) can be connected;
a network address storing step wherein network address storing means (103) of the first mobile packet communication terminal (10) stores the network address acquired by the network address acquiring means (101);
a network address notifying step wherein network address notifying means (103) of the first mobile packet communication terminal (10) notifies the second packet communication terminal (30) of the network address stored in the network address storing means (102);
a destination network address storing step wherein destination network address storing means (303) of the second packet communication terminal (30) stores the network address notified of by the first mobile packet communication terminal (10), as a destination network address;
a first packet generating step (S163, S166) wherein second packet generating means (308) of the second packet communication terminal (30) generates a packet from data to be transmitted to the first mobile packet communication terminal (10);
a first packet transmitting step (S164, S167) wherein second packet transmitting means (310) of the second packet communication terminal (30) transmits the packet to the first mobile packet communication terminal (10); and
a first packet receiving step (S165) wherein first packet receiving means (105) of the first mobile packet communication terminal (10) receives the packet transmitted from the second packet communication terminal (30) to the network address;
wherein in the network address acquiring step, when there exist a plurality of networks (50, 70) to which the first mobile packet communication terminal (10) can be connected, the network address acquiring means (101) of the first mobile packet communication terminal (10) acquires a plurality of said network addresses from the respective networks (50, 70);
wherein in the network address storing step the network address storing means (102) of the first mobile packet communication terminal (10) stores the plurality of network addresses;
wherein in the network address notifying step the network address notifying means (103) of the first mobile packet communication terminal (10) notifies the second packet communication terminal (30) of the plurality of network addresses;
wherein in the destination network address storing step, when a plurality of said network addresses are notified of by the first mobile packet communication terminal (10), the destination network address storing means (303) of the second packet communication terminal (30) stores a plurality of said destination network addresses corresponding to the respective network addresses;
wherein in the first packet transmitting step (S164, S167), when a plurality of said destination network addresses are stored in the destination network address storing means (303), the second packet transmitting means (310) of the second packet communication terminal (30) transmits said packets generated from identical data, to the respective destination network addresses; and
wherein in the first packet receiving step (S168) the first packet receiving means (105) of the first mobile packet communication terminal (10) receives the packets generated from the identical data and transmitted from the second packet communication terminal (30) to the respective destination network addresses.

18. A packet communication method for packet communication between a first mobile packet communication terminal (10) and a second packet communication terminal (30), the packet communication method comprising:
a network address acquiring step wherein network address acquiring means (101) of the first mobile packet communication terminal (10) acquires a network address of the mobile packet communication terminal (10) from a network (50, 70) to which the first mobile packet communication terminal (10) can be connected;
a network address storing step wherein network address storing means (102) of the first mobile packet communication terminal (10) stores the network address acquired by the network address acquiring means (101);
a network address notifying step wherein network address notifying means (103) of the first mobile packet communication terminal (10) notifies the second packet communication terminal (30) of the network address stored in the network address storing means (102);
a destination network address storing step wherein destination network address storing means (303) of the second packet communication terminal (30) stores the network address notified of by the first mobile packet communication terminal (10), as a destination network address;
a second packet generating step (S173, S175) wherein first packet generating means (110) of the first mobile packet communication terminal (10) generates a packet from data to be transmitted to the second packet communication terminal (30);
a second packet transmitting step (S174, S177) wherein first packet transmitting means (112) of the first mobile packet communication terminal (10) provides the packet with the network address stored in the network address storing means (102) and transmits the packet to the second packet communication terminal (30); and
a second packet receiving step (S178) wherein second packet receiving means (301) of the second packet communication terminal (30) receives the packet transmitted from the first mobile packet communication terminal (10);
wherein in the network address acquiring step, when there exist a plurality of networks (50, 70) to which the first mobile packet communication terminal (10) can be connected, the network address acquiring means (101) of the first mobile packet communication terminal (10) acquires a plurality of said network addresses from the respective networks (50, 70);
wherein in the network address storing step the network address storing means (102) of the first mobile packet communication terminal (10) stores the plurality of network addresses;
wherein in the network address notifying step the network address notifying means (103) of the first mobile packet communication terminal (10) notifies the second packet communication terminal (30) of the plurality of network addresses;
wherein in the destination network address storing step, when a plurality of said network addresses are notified of by the first mobile packet communication terminal (10), the destination network address storing means (303) of the second packet communication terminal (30) stores a plurality of said destination network addresses corresponding to the respective network addresses;
wherein in the second packet transmitting step (S174, S177), when a plurality of said network addresses are stored in the network address storing means (102), the first packet transmitting means (112) of the first mobile packet communication terminal (10) provides said packets generated from identical data by the first packet generating means (110), with the network addresses acquired from the respective networks (50, 70) and transmits the packets to the respective networks (50, 70); and
wherein in the second packet receiving step (S178) the second packet receiving means (301) of the second packet communication terminal (30) receives a packet transmitted from the first mobile packet communication terminal (10), provided with one of the plurality of network addresses, and generated from the identical data.

## Patentansprüche

1. Mobil-Paket-Kommunikations-Endgerät (10) für Paket-Kommunikation aufweisend:
• Netzwerk-Adresse-Akquirierungs-Mittel (101) zum Akquirieren einer Netzwerk-Adresse des Mobil-Paket-Kommunikations-Endgeräts (10) von einem Netzwerk (50, 70), mit welchem das Mobil-Paket-Kommunikations-Endgerät (10) verbunden sein kann;
• Netzwerk-Adresse-Speicher-Mittel (102) zum Speichern der von dem Netzwerk-Adresse-zakquirierungs-Mittel (101) akquirierten Netzwerk-Adresse;
• Netzwerk-Adresse-Benachrichtigungs-Mittel (103) zum Benachrichtigen eines korrespondieren Paket-Kommunikations-Endgeräts (30) über die in dem Netzwerk-Adresse-Speicher-Mittel (102) gespeicherte Netzwerk-Adresse; und
• erstes Paket-Empfangs-Mittel (105) zum Empfangen eines von dem korrespondieren Paket-Kommunikations-Endgerät (30) an die Netzwerk-Adresse gesendeten Pakets;
• wobei, wenn eine Mehrzahl von Netzwerken (50, 70) existiert, mit denen das Mobil-Paket-Kommunikations-Endgerät (10) verbunden sein kann, das Netzwerk-Adresse-Akquirierungs-Mittel (101) eine Mehrzahl von den Netzwerk-Adressen von den jeweiligen Netzwerken (50, 70) akquiriert;
• wobei das Netzwerk-Adresse-Speicher-Mittel (102) die Mehrzahl von Netzwerk-Adressen speichert;
• wobei das Netzwerk-Adresse-Benachrichtigungs-Mittel (103) das korrespondierende Paket-Kommunikations-Endgerät (30) über die Mehrzahl von Netzwerk-Adressen benachrichtigt, und
• wobei das erste Paket-Empfangs-Mittel (105) aus identischen Daten erzeugte und von dem korrespondieren Paket-Kommunikations-Endgerät (30) an die jeweiligen Netzwerk-Adressen gesendete Pakete empfängt.

2. Mobil-Paket-Kommunikations-Endgerät (10) gemäß Anspruch 1, ferner aufweisend Ineffektives-Netzwerk-Adresse-Benachrichtungs-Mittel (103) zum Benachrichtigen des korrespondieren Paket-Kommunikations-Endgeräts (30) über die von dem Netzwerk-Adresse-Akquirierungs-Mittel (101) von dem Netzwerk (50, 70), mit dem das Mobil-Paket-Kommunikations-Endgerät (10) nicht länger verbunden bleiben kann, akquirierte Netzwerk-Adresse und Information, dass die Netzwerk-Adresse ineffektiv gemacht wurde.

3. Mobil-Paket-Kommunikations-Endgerät (10) gemäß Anspruch 1 oder 2, ferner aufweisend:
• Funk-Wellen-Intensitäts-Mess-Mittel (104) zum, wenn eine Mehrzahl von den Netzwerk-Adressen in dem Netzwerk-Adresse-Speicher-Mittel (102) gespeichert sind, Messen von Intensitäten von Funk-Wellen von den jeweiligen Netzwerken (50, 70), von denen die jeweiligen Netzwerk-Adressen akquiriert wurden; und
• Effektives-Netzwerk-Adresse-Benachrichtigungs-Mittel (103) zum, wenn eine maximale Intensität aus den von dem Funk-Wellen-Intensitäts-Mess-Mittel (104) gemessenen Intensitäten nicht unter einem ersten vorgegebenen Schwellwert liegt, Benachrichtigen des korrespondieren Paket-Kommunikations-Endgeräts (30) über die von dem Netzwerk-Adresse-Akquirierungs-Mittel (101) von dem Netzwerk, das die Funk-Welle der maximalen Intensität übertragen hat, akquirierten Netzwerk-Adresse, und Information, dass ein Kommunikations-Zustand mit dem Netzwerk gut ist.

4. Mobil-Paket-Kommunikations-Endgerät (10) gemäß Anspruch 3, ferner aufweisend Kommunikations-Zustand-Benachrichtigungs-Mittel (103) zum, wenn alle die von dem Funk-Wellen-Intensitäts-Mess-Mittel (104) gemessenen Intensitäten der Funk-Wellen von der Mehrzahl von Netzwerken (50, 70) kleiner als ein zweiter vorgegebener Schwellwert sind, Benachrichtigen des korrespondieren Paket-Kommunikations-Endgeräts (30) über Information, dass es kein Netzwerk gibt, von dem das Mobil-Paket-Kommunikations-Endgerät (10) eine Funk-Welle von nicht weniger als dem zweiten vorgegebenen Schwellwert empfangen kann.

5. Mobil-Paket-Kommunikations-Endgerät (10) für Paket-Kommunikation aufweisend:
• Netzwerk-Adresse-Akquirierungs-Mittel (101) zum Akquirieren einer Netzwerk-Adresse des Mobil-Paket-Kommunikations-Endgeräts (10) von einem Netzwerk (50, 70), mit welchem das Mobil-Paket-Kommunikations-Endgerät (10) verbunden sein kann;
• Netzwerk-Adresse-Speicher-Mittel (102) zum Speichern der von dem Netzwerk-Adresse-Akquirierungs-Mittel (101) akquirierten Netzwerk-Adresse;
• Netzwerk-Adresse-Benachrichtigungs-Mittel (103) zum Benachrichtigen eines korrespondieren Paket-Kommunikations-Endgeräts (30) über die in dem Netzwerk-Adresse-Speicher-Mittel (102) gespeicherte Netzwerk-Adresse;
• erstes Paket-Erzeugungs-Mittel (110) zum Erzeugen eines Pakets aus zu dem korrespondieren Paket-Kommunikations-Endgerät (30) zu übertragenden Daten; und
• erstes Paket-Übertragungs-Mittel (112) zum Versehen des Pakets mit der in dem Netzwerk-Adresse-Speicher-Mittel (102) gespeicherten Netzwerk-Adresse und zum Übertragen des Pakets zu dem korrespondierenden Paket-Kommunikations-Endgerät (30);
• wobei, wenn eine Mehrzahl von Netzwerken (50, 70) existiert, mit denen das Mobil-Paket-Kommunikations-Endgerät (10) verbunden sein kann, das Netzwerk-Adresse-Akquirierungs-Mittel (101) eine Mehrzahl von den Netzwerk-Adressen von den jeweiligen Netzwerken (50, 70) akquiriert;
• wobei das Netzwerk-Adresse-Speicher-Mittel (102) die Mehrzahl von Netzwerk-Adressen speichert;
• wobei das Netzwerk-Adresse-BenaChrichtigungs-Mittel (103) das korrespondierende Paket-Kommunikations-Endgerät (30) über die Mehrzahl von Netzwerk-Adressen benachrichtigt; und
• wobei, wenn eine Mehrzahl der Netzwerk-Adressen in dem Netzwerk-Adresse-Speicher-Mittel (102) gespeichert sind, das erste Paket-Übertragungs-Mittel (112) die aus identischen Daten von dem ersten Paket-Erzeugungs-Mittel (110) erzeugten Pakete mit den von den jeweiligen Netzwerken (50, 70) akquirierten Netzwerk-Adressen versieht und die Pakete zu den jeweiligen Netzwerken (50, 70) überträgt.

6. Mobil-Paket-Kommunikations-Endgerät (10) gemäß Anspruch 5, wobei, wenn eine Mehrzahl von den Netzwerk-Adressen in dem Netzwerk-Speicher-Mittel (102) gespeichert sind, die zu den jeweiligen Netzwerken (50, 70) von dem ersten Paket-Übertragungs-Mittel (112) übertragenen Pakete identisch zueinander sind.

7. Mobil-Paket-Kommunikations-Endgerät (10) gemäß Anspruch 5, ferner aufweisend erste Redundantes-Paket-Erzeugungs-Mittel (111) zum Erzeugen von redundanten Paketen durch Vorwärts-Fehler-Korrektur-Codes von Daten-Teil von von dem ersten Paket-Erzeugungs-Mittel (110) erzeugten Paketen,
wobei das erste Paket-Übertragungs-Mittel (112) die von dem ersten Paket-Erzeugungs-Mittel (110) erzeugten Pakete und die von dem ersten Redundates-Paket-Erzeugungs-Mittel (111) erzeugten Pakete verteilt und überträgt an die Netzwerke (50, 70), in solch einer Weise, dass selbst in einem Fall wo das Mobil-Paket-Kommunikations-Endgerät (10) nicht länger mit irgend einem der Mehrzahl von Netzwerken (50, 70) verbunden bleiben kann, das korrespondierende Paket-Kommunikations-Endgerät (30) verschiedene Pakete in der Zahl gleich oder größer als der Zahl von von dem ersten Paket-Erzeugungs-Mittel (111) erzeugten Paketen empfangen kann.

8. Paket-Kommuriikations-Endgerät (30) für Paket-Kommunikation aufweisend:
• Ziel-Netzwerk-Adresse-Speicher-Mittel (303) zum Speichern einer Netzwerk-Adresse, über die von einem korrespondierenden Mobil-Paket-Kommunikations-Endgerät (10) benachrichtigt wurde, als eine Ziel-Netzwerk-Adresse;
• zweites Paket-Erzeugungs-Mittel (308) zum Erzeugen eines Pakets aus zu dem korrespondieren Mobil-Paket-Kommunikations-Endgerät (10) zu übertragenden Daten; und
• zweites Paket-Übertragungs-Mittel (310) zum Übertragen des Pakets zu dem korrespondierenden Mobil-Paket-Kommunikatioris-Endgerät (10);
• wobei, wenn über eine Mehrzahl von den Netzwerken benachrichtigt wird von dem korrespondierenden Mobil-Paket-Kommunikations-Endgerät (10), das Netzwerk-Adresse-Speicher-Mittel (303) eine Mehrzahl von den Ziel-Netzwerk-Adressen korrespondierend zu der Mehrzahl von Netzwerk-Adressen speichert; und
• wobei, wenn eine Mehrzahl von den Netzwerk-Adressen in dem Ziel-Netzwerk-Adresse-Speicher-Mittel (303) gespeichert sind, das zweite Paket-Übertragungs-Mittel (310) die aus identischen Daten erzeugten Pakete zu den jeweiligen Ziel-Netzwerken-Adressen überträgt.

9. Paket-Kommunikations-Endgerät (30) gemäß Anspruch 8,
wobei, wenn eine Mehrzahl der Ziel-Netzwerk-Adressen in dem Ziel-Netzwerk-Adress-Speicher-Mittel (303) gespeichert sind, die zu der Mehrzahl von Netzwerk-Adresen von dem zweiten Paket-Übertragungs-Mittel (310) übertragenen Pakete identisch zueinander sind.

10. Paket-Kommunikations-Endgerät (30) gemäß Anspruch 9, ferner aufweisend zweite Redundantes-Paket-Erzeugungs-Mittel (309) zum Erzeugen von redundanten Paketen durch Vorwärts-Fehler-Korrektur-Codes von Daten-Teil von von dem zweiten Paket-Erzeugungs-Mittel (308) erzeugten Paketen,
wobei, wenn eine Mehrzahl von Ziel-Netzwerk-Adressen in dem Ziel-Netzwerk-Adresse-Speicher-Mittel (303) gespeichert sind, das zweite Paket-Übertragungs-Mittel (310) die von dem zweiten Paket-Erzeugungs-Mittel (308) erzeugten Pakete und die von dem zweiten Redundates-Paket-Erzeugungs-Mittel (309) erzeugten redundanten Pakete verteilt und übertragt an die Mehrzahl von Ziel-Netzwerk-Adressen, in solch einer Weise, dass selbst in einem Fall wo irgendeine der Ziel-Netzwerk-Adressen ineffektiv wird, das korrespondierende Mobil-Paket-Kommunikations-Endgerät (10) verschiedene Pakete in der Zahl gleich oder größer als der Zahl von von dem zweiten Paket-Erzeugungs-Mittel (308) erzeugten Paketen empfangen kann.

11. Paket-Kommunikations-Endgerät (30) gemäß einem der Ansprüche 8 bis 10, wobei, basierend auf der Netzwerk-Adresse, über die von dem korrespondierenden Mobil-Paket-Kommunikations-Endgerät (10) benachrichtigt wurde, und Information, dass die Netzwerk-Adresse ineffektiv gemacht wurde, das Ziel-Netzwerk-Adresse-Speicher-Mittel (303) die Ziel-Netzwerk-Adresse korrespondierend zu der Netzwerk-Adresse ineffektiv macht.

12. Paket-Kommunikations-Endgerät (30) gemäß einem der Ansprüche 8 bis 11, wobei, wenn eine Mehrzahl von den Ziel-Netzwerk-Adressen in dem Ziel-Adresse-Speicher-Mittel (303) gespeichert sind, basierend auf der Netzwerk-Adresse, über die benachrichtigt wurde von dem korrespondierenden Mobil-Paket-Kommunikations-Endgerät (10), und Information, dass ein Kommunikations-Zustand mit dem Netzwerk, von dem die Netzwerk-Adresse akquiriert wurde, gut ist, das zweite Paket-Übertragungs-Mittel (310) die Pakete zu der korrespondierend zu der Netzwerk-Adresse in dem Ziel-Netzwerk-Adresse-Speicher-Mittel (303) gespeicherte Ziel-Netzwerk-Adresse überträgt.

13. Paket-Kommunikations-Endgerät (30) gemäß Anspruch 12, wobei, basierend auf Information, dass es kein Netzwerk gibt, von dem das korrespondierende Mobil-Paket-Kommunikations-Endgerät (10) eine Funk-Welle von nicht weniger als einem zweiten vorgegebenene Schwellwert empfangen kann, über das von dem korrespondierenden Mobil-Paket-Kommunikations-Endgerät (10) benachrichtigt wurde, das zweite Paket-Übertragungs-Mittel (310) die Pakete zu den jeweiligen in dem Ziel-Netzwerk-Adress-Speicher-Mittel (303) gespeicherten Ziel-Netzwerk-Adressen überträgt.

14. Paket-Kommunikations-Endgerät (30) für Paket-Kommunikation aufweisend:
• Ziel-Netzwerk-Adresse-Speicher-Mittel (303) zum Speichern einer Netzwerk-Adresse, über die von einem korrespondierenden Mobil-Paket-Kommunikations-Endgerät (10) benachrichtigt wurde, als einer Ziel-Netzwerk-Adresse; und
• zweites Paket-Empfangs-Mittel (301) zum Empfangen eines von dem korrespondieren Mobil-Paket-Kommunikations-Endgerät (10) übertragenen Pakets;
• wobei, wenn über eine Mehrzahl von den Netzwerken von dem korrespondierenden Mobil-Paket-Kommunikations-Netzwerk (10) benachrichtigt wird, das Ziel-Netzwerk-Adresse-Speicher-Mittel (303) eine Mehrzahl von den Ziel-Netzwerk-Adressen korrespondierend zu den jeweiligen Netzwerk-Adressen speichert; und
• wobei das zweite Paket-Empfangs-Mittel (301.) ein von dem korrespondierenden Mobil-Paket-Kommunikations-Endgerät (10) übertragenes Paket empfangt, versehen mit einer der Mehrzahl von Ziel-Netzwerk-Adressen, und erzeugt von identischen Daten.

15. Paket-Kommunikations-System (1) für Paket-Kommunikation zwischen einem ersten Mobil-Paket-Kommunikations-Endgerät (10) gemäß einem der Ansprüche 1 bis 4 und einem zweiten Paket-Kommunikations-Endgerät (30) gemäß einem der Ansprüche 8 bis 13.

16. Paket-Kommunikatioris-System (1) für Paket-Kommunikation zwischen einem ersten Mobil-Paket-Kommunikations-Endgerät (10) gemäß einem der Ansprüche 5 bis 7 und einem zweiten Paket-Kommunikations-Endgerät (30) gemäß Anspruch 14.

17. Paket-Kommunikations-Verfahren für Paket-Kommunikation zwischen einem ersten Mobil-Paket-Kommunikations-Endgerät (10) und einem zweiten Paket-Kommunikations-Endgerät (30), das Paket-Kommunikations-Verfahren aufweisend:
• einen Netzwerk-Adresse-Akquirierungs-Schritt, in dem ein Netzwerk-Adresse-Akquirierungs-Mittel (101) des ersten Mobil-Paket-Kommunikations-Endgeräts (10) eine Netzwerk-Adresse des Mobil-Paket-Kommunikations-Endgeräts (10) von einem Netzwerk (50, 70), mit welchem das erste Mobil-Paket-Kommunikations-Endgerät (10) verbunden sein kann, akquiriert ;
• einen Netzwerk-Adresse-Speicher-Schritt, in dem ein Netzwerk-Adresse-Speicher-Mittel (103) des ersten Mobil-Paket-Kommunikations-Endgeräts (10) die von dem Netzwerk-Adresse-Akquirierungs-Mittel (101) akquirierte Netzwerk-Adresse speichert;
• einen Netzwerk-Adresse-Benachrichtigungs-Schritt, in dem ein Netzwerk-Adresse-Benachrichtigungs-Mittel (103) des ersten Mobil-Paket-Kammunikations-Endgeräts (10) das zweite Paket-Kommunikations-Endgeräts (30) über die in dem Netzwerk-Adresse-Speicher-Mittel (102) gespeicherte Netzwerk-Adresse benachrichtigt;
• einen Ziel-Netzwerk-Adresse-Speicher-Schritt, in dem ein Ziel-Netzwerk-Adresse-Speicher-Mittel (303) des zweiten Paket-Kommunikations-Endgeräts (30) die Netzwerk-Adresse, über die von dem ersten Mobil-Paket-Kommunikations-Endgerät (10) benachrichtigt wurde, speichert als eine Ziel-Netzwerk-Adresse;
• einen ersten Paket-Erzeugungs-Schritt (S163, S166), in dem ein zweites Paket-Erzeugungs-Mittel (308) des zweiten Paket-Kommunikations-Endgeräts (30) ein Paket aus zu dem ersten Mobil-Paket-Kommunikations-Endgerät (10) zu übertragenden Daten erzeugt;
• einen ersten Paket-Übertragungs-Schritt (S164, S167), in dem ein zweites Paket-Übertragungs-Mittel (310) des zweiten Paket-Kommunikations-Endgeräts (30) das Paket zu dem ersten Mobil-Paket-Kommunikations-Endgerät (10) überträgt; und
• einen ersten Paket-Empfangs-Schritt (S165), in dem ein erstes Paket-Empfangs-Mittel (105) des ersten Mobil-Paket-Kommunikations-Endgeräts (10) das von dem zweiten Paket-Kommunikations-Endgerät (30) an die Netzwerk-Adresse gesendete Paket empfängt;
• wobei in dem Netzwerk-Adresse-Akquirierungs-Schritt, wenn eine Mehrzahl von Netzwerken (50, 70) existiert, mit denen das erste Mobil-Paket-Kommunikations-Endgerät (10) verbunden sein kann, das Netzwerk-Adresse-Akquirierungs-Mittel (101) des ersten Mobil-Paket-Kommunikations-Endgeräts (10) eine Mehrzahl von den Netzwerk-Adressen von den jeweiligen Netzwerken (50, 70) akquiriert;
• wobei in dem Netzwerk-Adresse-Speicher-Schritt das Netzwerk-Adresse-Speicher-Mittel (102) des ersten Mobil-Paket-Kommunikations-Endgeräts (10) die Mehrzahl von Netzwerk-Adressen speichert;
• wobei in dem Netzwerk-Adresse-Benachrichtigungs-Schritt das Netzwerk-Adresse-Benachrichtigungs-Mittel (103) des ersten Mobil-Paket-Kommunikations-Endgeräts (10) das zweite Paket-Kommunikations-Endgerät (30) über die Mehrzahl von Netzwerk-Adressen benachrichtigt;
• wobei in dem Ziel-Netzwerk-Adresse-Speicher-Schritt, wenn über eine Mehrzahl von Netzwerk-Adressen benachrichtigt wird von dem ersten Mobil-Paket-Kommunikations-Endgerät (10), das Netzwerk-Adresse-Speicher-Mittel (303) des zweiten Paket-Kommunikations-Endgeräts (30) eine Mehrzahl von den Ziel-Netzwerk-Adressen korrespondierend zu den jeweiligen Netzwerk-Adressen speichert;
• wobei in dem ersten Paket-Übertragungs-Schritt (S164, S167), wenn eine Mehrzahl von den Ziel-Netzwerk-Adressen in dem Ziel-Netzwerk-Adresse-Speicher-Mittel (303) gespeichert ist, das zweite Paket-Übertragungs-Mittel (310) des zweiten Paket-Kommunikations-Endgeräts (30) die aus identischen Daten erzeugten Pakete zu den jeweiligen Ziel-Netzwerken-Adressen überträgt; und
• wobei in dem ersten Paket-Empfangs-Schritt (S168) das erste Paket-Empfangs-Mittel (105) des ersten Mobil-Paket-Kommunikations-Endgeräts (10) die aus den identischen Daten erzeugten und von dem zweiten Paket-Kommunikations-Endgerät (30) an die jeweiligen Netzwerk-Adressen übertragenen Pakete empfängt.

18. Paket-Kommunikations-Verfahren für Paket-Kommunikation zwischen einem ersten Mobil-Paket-Kommunikations-Endgerät (10) und einem zweiten Paket-Kommunikations-Endgerät (30) , das Paket-Kommunikations-Verfahren aufweisend:
• einen Netzwerk-Adresse-Akquirierungs-Schritt, in dem ein Netzwerk-Adresse-Akquirierungs-Mittel (101) des ersten Mobil-Paket-Kommunikations-Endgeräts (10) eine Netzwerk-Adresse des Mobil-Paket-Kommunikations-Endgeräts (10) von einem Netzwerk (50, 70), mit welchem das erste Mobil-Paket-Kommunikations-Endgerät (10) verbunden sein kann, akquiriert;
• einen Netzwerk-Adresse-Speicher-Schritt, in dem ein Netzwerk-Adresse-Speicher-Mittel (102) des ersten Mobil-Paket-Kommunikations-Endgeräts (10) die von dem Netzwerk-Adresse-Akquirierungs-Mittel (101) akquirierte Netzwerk-Adresse speichert;
• einen Netzwerk-Adresse-Benachrichtigungs-Schritt, in dem ein Netzwerk-Adresse-Benachrichtigungs-Mittel (103) des ersten Mobil-Paket-Kommunikations-Endgeräts (10) das zweite Paket-Kommunikations-Endgerät (30) über die in dem Netzwerk-Adresse-Speicher-Mittel (102) gespeicherte Netzwerk-Adresse benachrichtigt;
• einen Ziel-Netzwerk-Adresse-Speicher-Schritt, in dem ein Ziel-Netzwerk-Adresse-Speicher-Mittel (303) des zweiten Paket-Kommunikations-Endgeräts (30) die Netzwerk-Adresse, über die von dem ersten Mobil-Paket-KOmmunikations-Enagerät (10) benachrichtigt wurde, speichert als eine Ziel-Netzwerk-Adresse;
• einen zweiten Paket-Erzeugungs-Schritt (S173, S175), in dem ein erstes Paket-Erzeugungs-Mittel (110) des ersten Mobil-Paket-Kommunikations-Endgeräts (10) ein Paket aus zu dem zweiten Paket-Kommunikations-Endgerät (30) zu übertragenden Daten erzeugt;
• einen zweiten Paket-Übertragungs-Schritt (S174, S177), in dem ein erstes Paket-Übertragungs-Mittel (112) des ersten Mobil-Paket-Kommunikations-Endgeräts (10) das Paket mit der in dem Netzwerk-Adresse-Speicher-Mittel (102) gespeicherten Netzwerk-Adresse versieht und das Paket überträgt zu dem zweiten Paket-Kommunikations-Endgerät (30); und
• einen zweiten Paket-Empfangs-Schritt (S178), in dem ein zweites Paket-Empfangs-Mittel (301) des zweiten Paket-Kommunikations-Endgeräts (30) das von dem ersten Mobil-Paket-Kommunikations-Endgerät (10) übertragene Paket empfängt;
• wobei in dem Netzwerk-Adresse-Akquirierungs-Schritt, wenn eine Mehrzahl von Netzwerken (50, 70) existiert, mit denen das erste Mobil-Paket-Kommunikations-Endgerät (10) verbunden sein kann, das Netzwerk-Adresse-Akquirierungs-Mittel (101) des ersten Mobil-Paket-xommunikations-Endgeräts (10) eine Mehrzahl von den Netzwerk-Adressen von den jeweiligen Netzwerken (50, 70) akquiriert;
• wobei in dem Netzwerk-Adresse-Speicher-Schritt das Netzwerk-Adresse-Speicher-Mittel (102) des ersten Mobil-Paket-Kommunikations-Endgeräts (10) die Mehrzahl von Netzwerk-Adressen speichert;
• wobei in dem Netzwerk-Adresse-Benachrichtigungs-Schritt das Netzwerk-Adresse-Benachrichtigungs-Mittel (103) des ersten Mobil-Paket-Kommunikations-Endgeräts (10) das zweite Paket-Kommunikations-Endgerät (30) über die Mehrzahl von Netzwerk-Adressen benachrichtigt;
• wobei in dem Ziel-Netzwerk-Adresse-Speicher-Schritt, wenn über eine Mehrzahl der Netzwerken von dem ersten Mobil-Paket-Kommunikations-Netzwerk (10) benachrichtigt wird, das Ziel-Netzwerk-Adresse-Speicher-Mittel (303) des zweiten Paket-Kommunikations-Endgeräts (30) eine Mehrzahl von den Ziel-Netzwerk-Adressen korrespondierend zu den jeweiligen Netzwerk-Adressen speichert;
• wobei in dem zweiten Paket-Übertragungs-Schritt (S174, S177), wenn eine Mehrzahl von den Netzwerk-Adressen in dem Netzwerk-Adresse-Speicher-Mittel (102) gespeichert sind, das erste Paket-Übertragungs-Mittel (112) des ersten Mobil-Paket-Kommunikations-Endgeräts (10) die aus identischen Daten von dem ersten Paket-Erzeugungs-Mittel (110) erzeugten Pakete mit den von den jeweiligen Netzwerken (50, 70) akquirierten Netzwerk-Adressen versieht und die Pakete zu den jeweiligen Netzwerken (50, 70) überträgt; und
• wobei in dem zweiten Paket-Empfangs-Schritt (S178) das zweite Paket-Empfangs-Mittel (301) des zweiten Paket-Kommunikations-Endgeräts (30) ein von dem ersten Mobil-Paket-Kommunikations-Endgerät (10) übertragenes Paket empfängt, versehen mit einer der Mehrzahl von Ziel-Netzwerk-Adressen, und erzeugt aus den identischen Daten.

## Revendications

1. Terminal de communication mobile par paquets (10) destiné à une communication par paquets comprenant :
des moyens d'acquisition d'adresse de réseau (101) destinés à acquérir une adresse de réseau du terminal de communication mobile par paquets (10) à partir d'un réseau (50, 70) auquel le terminal de communication mobile par paquets (10) peut être connecté ;
des moyens de stockage d'adresse de réseau (102) destinés à stocker l'adresse de réseau acquise par les moyens d'acquisition d'adresse de réseau (101) ;
des moyens de notification d'adresse de réseau (103) destinés à notifier à un terminal de communication par paquets (30) d'un correspondant l'adresse de réseau stockée dans les moyens de stockage d'adresse de réseau (102) ; et
des premiers moyens de réception de paquets (105) destinés à recevoir un paquet envoyé par le terminal de communication par paquets (30) d'un correspondant à l'adresse de réseau ;
dans lequel, quand il existe une pluralité de réseaux (50, 70) auxquels le terminal de communication mobile par paquets (10) peut être connecté, les moyens d'acquisition d'adresse de réseau (101) acquièrent une pluralité desdites adresses de réseau à partir des réseaux respectifs (50, 70) ;
dans lequel les moyens de stockage d'adresse de réseau (102) stockent la pluralité d'adresses de réseau ;
dans lequel les moyens de notification d'adresse de réseau (103) notifient au terminal de communication par paquets (30) d'un correspondant la pluralité d'adresses de réseau ; et
dans lequel les premiers moyens de réception de paquet (105) reçoivent des paquets générés à partir de données identiques et envoyés par le terminal de communication par paquets (30) d'un correspondant aux adresses de réseau respectif.

2. Terminal de communication mobile par paquets (10) selon la revendication 1, comprenant en outre des moyens de notification d'adresse de réseau inefficace (103) destinés à notifier au terminal de communication par paquets (30) d'un correspondant l'adresse de réseau acquise par les moyens d'acquisition d'adresse de réseau (101) à partir du réseau (50, 70) auquel le terminal de communication mobile par paquets (10) ne peut plus rester connecté, et des informations selon lesquelles ladite adresse de réseau est rendue inefficace.

3. Terminal de communication mobile par paquets (10) selon la revendication 1 ou la revendication 2, comprenant en outre :
des moyens de mesure d'intensité d'onde radio (104) destinés à mesurer, quand une pluralité desdites adresses de réseau sont stockées dans les moyens de stockage d'adresse de réseau (102), les intensités des ondes radio en provenance des réseaux respectifs (50, 70) à partir desquels les adresses de réseau respectif ont été acquises ; et
des moyens de notification d'adresse de réseau efficace (103) destinés à notifier, quand une intensité maximum parmi les intensités mesurées par les moyens de mesure d'intensité d'onde radio (104) n'est pas inférieure à un premier seuil prédéterminé, au terminal de communication par paquets (30) d'un correspondant l'adresse de réseau acquise par les moyens d'acquisition d'adresse de réseau (101) à partir du réseau ayant transmis l'onde radio qui présente l'intensité maximum, et des informations selon lesquelles l'état de communication avec ledit réseau est bon.

4. Terminal de communication mobile par paquets (10) selon la revendication 3, comprenant en outre des moyens de notification d'état de communication (103) destinés à notifier, lorsque toutes les intensités des ondes radio en provenance de la pluralité de réseaux (50, 70) mesurées par les moyens de mesure d'intensité d'onde radio (104) sont inférieures à un deuxième seuil prédéterminé, au terminal de communication par paquets (30) d'un correspondant des informations selon lesquelles il n'y a aucun réseau en provenance duquel le terminal de communication mobile par paquets (10) peut recevoir une onde radio qui n'est pas inférieure au deuxième seuil prédéterminé.

5. Terminal de communication mobile par paquets (10) destiné à une communication par paquets comprenant :
des moyens d'acquisition d'adresse de réseau (101) destinés à acquérir une adresse de réseau du terminal de communication mobile par paquets (10) à partir d'un réseau (50, 70) auquel le terminal de communication mobile par paquets (10) peut être connecté ;
des moyens de stockage d'adresse de réseau (102) destinés à stocker l'adresse de réseau acquise par les moyens d'acquisition d'adresse de réseau (101);
des moyens de notification d'adresse de réseau (103) destinés à notifier à un terminal de communication par paquets (30) d'un correspondant l'adresse de réseau stockée dans les moyens de stockage d'adresse de réseau (102) ;
des premiers moyens de génération de paquets (110) destinés à générer un paquet à partir des données à transmettre au terminal de communication par paquets (30) d'un correspondant ; et
des premiers moyens d'émission de paquets (112) destinés à fournir au paquet l'adresse de réseau stockée dans les moyens de stockage d'adresse de réseau (102) et à émettre le paquet vers le terminal de communication par paquets (30) d'un correspondant ;
dans lequel, quand il existe une pluralité de réseaux (50, 70) auxquels le terminal de communication mobile par paquets (10) peut être connecté, les moyens d'acquisition d'adresse de réseau (101) acquièrent une pluralité desdites adresses de réseau à partir des réseaux respectifs (50, 70) ;
dans lequel les moyens de stockage d'adresse de réseau (102) stockent la pluralité d'adresses de réseau ;
dans lequel les moyens de notification d'adresse de réseau (103) notifient au terminal de communication par paquets (30) d'un correspondant la pluralité d'adresses de réseau ; et
dans lequel, quand une pluralité desdites adresses de réseau sont stockées dans les moyens de stockage d'adresse de réseau (102), les premiers moyens d'émission de paquets (112) fournissent auxdits paquets générés à partir de données identiques par les premiers moyens de génération de paquets (110), les adresses de réseau acquises à partir des réseaux respectifs (50, 70) et émettent les paquets vers les réseaux respectifs (50, 70).

6. Terminal de communication mobile par paquets (10) selon la revendication 5, dans lequel, quand une pluralité desdites adresses de réseau sont stockées dans les moyens de stockage d'adresse de réseau (102), lesdits paquets émis vers les réseaux respectifs (50, 70) par les premiers moyens d'émission de paquets (112) sont des paquets identiques les uns aux autres.

7. Terminal de communication mobile par paquets (10) selon la revendication 5, comprenant en outre des premiers moyens de génération de paquets redondants (111) destinés à générer des paquets redondants par des codes de correction d'erreurs sans voie de retour à partir de la partie de données desdits paquets générés par les premiers moyens de génération de paquets (110),
dans lequel les premiers moyens d'émission de paquets (112) distribuent et émettent les paquets générés par les premiers moyens de génération de paquets (110) et les paquets redondants générés par les premiers moyens de génération de paquets redondants (111), vers les réseaux (50, 70) de telles façon que même dans un cas où le terminal de communication mobile par paquets (10) ne peut plus rester connecté à aucun de la pluralité de réseaux (50, 70), le terminal de communication par paquets (30) d'un correspondant peut recevoir différents paquets en nombre égal ou supérieur au nombre de paquets générés par les premiers moyens de génération de paquets (111).

8. Terminal de communication par paquets (30) destiné à une communication par paquets comprenant :
des moyens de stockage d'adresse de réseau de destination (303) destinés à stocker une adresse de réseau notifiée par un terminal de communication mobile par paquets (10) d'un correspondant, comme adresse de réseau de destination ;
des deuxièmes moyens de génération de paquets (308) destinés à générer un paquet à partir des données à transmettre au terminal de communication mobile par paquets (10) d'un correspondant ; et
des deuxièmes moyens d'émission de paquets (310) destinés à émettre le paquet vers le terminal de communication mobile par paquets (10) d'un correspondant ;
dans lequel, quand une pluralité desdites adresses de réseau sont notifiées par le terminal de communication mobile par paquets (10) d'un correspondant, les moyens de stockage d'adresse de réseau de destination (303) stockent une pluralité desdites adresses de réseau de destination qui correspondent à la pluralité d'adresses de réseau ; et
dans lequel, quand une pluralité desdites adresses de réseau de destination sont stockées dans les moyens de stockage d'adresse de réseau de destination (303), les deuxièmes moyens d'émission de paquets (310) émettent lesdits paquets générés à partir de données identiques, vers les adresses de réseau de destination respectif.

9. Terminal de communication par paquets (30) selon la revendication 8,
dans lequel, quand une pluralité desdites adresses de réseau de destination sont stockées dans les moyens de stockage d'adresse de réseau de destination (303), lesdits paquets émis vers la pluralité d'adresses de réseau par les deuxièmes moyens d'émission de paquets (310) sont des paquets identiques les uns aux autres.

10. Terminal de communication par paquets (30) selon la revendication 9, comprenant en outre des deuxièmes moyens de génération de paquets redondants (309) destinés à générer des paquets redondants par des codes de correction d'erreurs sans voie de retour à partir de la partie de données des paquets générés par les deuxièmes moyens de génération de paquets (308),
dans lequel, quand une pluralité desdites adresses de réseau de destination sont stockées dans les moyens de stockage d'adresse de réseau de destination (303), les deuxièmes moyens d'émission de paquets (310) distribuent et émettent les paquets générés par les deuxièmes moyens de génération de paquets (308) et les paquets redondants générés par les deuxièmes moyens de génération de paquets redondants (309), vers la pluralité d'adresses de réseau de destination de telle façon que même dans un cas où n'importe laquelle des adresses de réseau de destination devient inefficace, le terminal de communication mobile par paquets (10) d'un correspondant puisse recevoir des paquets différents en nombre égal ou supérieur au nombre de paquets générés par les deuxièmes moyens de génération de paquets (308).

11. Terminal de communication par paquets (30) selon l'une quelconque des revendications 8 à 10, dans lequel, sur la base de l'adresse de réseau notifiée par le terminal de communication mobile par paquets (10) d'un correspondant, et des informations selon lesquelles ladite adresse de réseau est rendue inefficace, les moyens de stockage d'adresse de réseau de destination (303) rendent inefficace l'adresse de réseau de destination qui correspond à ladite adresse de réseau.

12. Terminal de communication par paquet (30) selon l'une quelconque des revendications 8 à 11, dans lequel, quand une pluralité desdites adresses de destination sont stockées dans les moyens de stockage d'adresse de destination (303), sur la base de l'adresse de réseau notifiée par le terminal de communication mobile par paquets (10) d'un correspondant, et des informations selon lesquelles l'état de communication avec le réseau à partir duquel ladite adresse de réseau a été acquise est bon, les deuxièmes moyens d'émission de paquets (310) émettent lesdits paquets vers l'adresse de réseau de destination qui correspond à l'adresse de réseau stockée dans les moyens de stockage d'adresse de réseau de destination (303).

13. Terminal de communication par paquets (30) selon la revendication 12,
dans lequel, sur la base des informations selon lesquelles il n'y a aucun réseau en provenance duquel le terminal de communication mobile par paquets (10) d'un correspondant peut recevoir une onde radio qui n'est pas inférieure à un deuxième seuil prédéterminé, notifiées par le terminal de communication mobile par paquets (10) d'un correspondant, les deuxièmes moyens d'émission de paquets (310) émettent lesdits paquets vers les adresses de réseau de destination respectif stockées dans les moyens de stockage d'adresse de réseau de destination (303).

14. Terminal de communication par paquets (30) destiné à une communication par paquets comprenant :
des moyens de stockage d'adresse de réseau de destination (303) destinés à stocker une adresse de réseau notifiée par un terminal de communication mobile par paquets (10) d'un correspondant, comme adresse de réseau de destination ; et
des deuxièmes moyens de réception de paquets (301) destinés à recevoir un paquet émis par le terminal de communication mobile par paquets (10) d'un correspondant ;
dans lequel, quand une pluralité desdites adresses de réseau sont notifiées par le terminal de communication mobile par paquets (10) d'un correspondant, les moyens de stockage d'adresse de réseau de destination (303) stockent une pluralité desdites adresses de réseau de destination qui correspondent aux adresses de réseau respectif ; et
dans lequel les deuxièmes moyens de réception de paquets (301) reçoivent un paquet émis par le terminal de communication mobile par paquets (10) d'un correspondant, avec l'une de la pluralité d'adresses de réseau de destination, et généré à partir de données identiques.

15. Système de communication par paquets (1) destiné à une communication par paquets entre un premier terminal de communication mobile par paquets (10) selon l'une quelconque des revendications 1 à 4 et un deuxième terminal de communication par paquets (30) selon l'une quelconque des revendications 8 à 13.

16. Système de communication par paquets (1) destiné à une communication par paquets entre un premier terminal de communication mobile par paquets (10) selon l'une quelconque des revendications 5 à 7 et un deuxième terminal de communication par paquets (30) selon la revendication 14.

17. Procédé de communication par paquets destiné à une communication par paquets entre un premier terminal de communication mobile par paquets (10) et un deuxième terminal de communication par paquets (30), le procédé de communication par paquets comprenant :
une étape d'acquisition d'adresse de réseau dans laquelle les moyens d'acquisition d'adresse de réseau (101) du premier terminal de communication mobile par paquets (10) acquièrent une adresse de réseau du terminal de communication mobile par paquets (10) à partir d'un réseau (50, 70) auquel le premier terminal de communication mobile par paquets (10) peut être connecté ;
une étape de stockage d'adresse de réseau dans laquelle les moyens de stockage d'adresse de réseau (103) du premier terminal de communication mobile par paquets (10) stockent l'adresse de réseau acquise par les moyens d'acquisition d'adresse de réseau (101) ;
une étape de notification d'adresse de réseau dans laquelle les moyens de notification d'adresse de réseau (103) du premier terminal de communication mobile par paquets (10) notifient au deuxième terminal de communication par paquets (30) l'adresse de réseau stockée dans les moyens de stockage d'adresse de réseau (102) ;
une étape de stockage d'adresse de réseau de destination dans laquelle les moyens de stockage d'adresse de réseau de destination (303) du deuxième terminal de communication par paquets (30) stockent l'adresse de réseau notifiée par le premier terminal de communication mobile par paquets (10), comme adresse de réseau de destination ;
une première étape de génération de paquets (S163, S166) dans laquelle les deuxièmes moyens de génération de paquets (308) du deuxième terminal de communication par paquets (30) génèrent un paquet à partir de données à émettre vers le premier terminal de communication mobile par paquets (10) ;
une première étape d'émission de paquets (S164, S167) dans laquelle les deuxièmes moyens d'émission de paquets (310) du deuxième terminal de communication par paquets (30) émettent le paquet vers le premier terminal de communication mobile par paquets (10) ; et
une première étape de réception de paquets (S165) dans laquelle les premiers moyens de réception de paquets (105) du premier terminal de communication mobile par paquets (10) reçoivent le paquet émis par le deuxième terminal de communication par paquets (30) vers l'adresse de réseau ;
dans lequel, dans l'étape d'acquisition d'adresse de réseau, quand il existe une pluralité de réseaux (50, 70) auxquels le premier terminal de communication mobile par paquets (10) peut être connecté, les moyens d'acquisition d'adresse de réseau (101) du premier terminal de communication mobile par paquets (10) acquièrent une pluralité desdites adresses de réseau à partir des réseaux respectifs (50, 70) ;
dans lequel, dans l'étape de stockage d'adresse de réseau, les moyens de stockage d'adresse de réseau (102) du premier terminal de communication mobile par paquets (10) stockent la pluralité d'adresses de réseau ;
dans lequel, dans l'étape de notification d'adresse de réseau, les moyens de notification d'adresse de réseau (103) du premier terminal de communication mobile par paquets (10) notifient au deuxième terminal de communication par paquets (30) la pluralité d'adresses de réseau ;
dans lequel, dans l'étape de stockage d'adresse de réseau de destination, quand une pluralité desdites adresses de réseau sont notifiées par le premier terminal de communication mobile par paquets (10), les moyens de stockage d'adresse de réseau de destination (303) du deuxième terminal de communication par paquets (30) stockent une pluralité desdites adresses de réseau de destination qui correspondent aux adresses de réseau respectif ;
dans lequel, dans la première étape d'émission de paquets (S164, S167), quand une pluralité desdites adresses de réseau de destination sont stockées dans les moyens de stockage d'adresse de réseau de destination (303), les deuxièmes moyens d'émission de paquets (310) du deuxième terminal de communication par paquets (30) émettent lesdits paquets générés à partir de données identiques, vers les adresses de réseau de destination respectif; et
dans lequel, dans la première étape de réception de paquets (S168), les premiers moyens de réception de paquets (105) du premier terminal de communication mobile par paquets (10) reçoivent les paquets générés à partir de données identiques et émis par le deuxième terminal de communication par paquets (30) vers les adresses de réseau de destination respectif.

18. Procédé de communication par paquets destiné à une communication par paquets entre un premier terminal de communication mobile par paquets (10) et un deuxième terminal de communication par paquets (30), le procédé de communication par paquets comprenant :
une étape d'acquisition d'adresse de réseau dans laquelle les moyens d'acquisition d'adresse de réseau (101) du premier terminal de communication mobile par paquets (10) acquièrent une adresse de réseau du terminal de communication mobile par paquets (10) à partir d'un réseau (50, 70) auquel le premier terminal de communication mobile par paquets (10) peut être connecté ;
une étape de stockage d'adresse de réseau dans laquelle les moyens de stockage d'adresse de réseau (102) du premier terminal de communication mobile par paquets (10) stockent l'adresse de réseau acquise par les moyens d'acquisition d'adresse de réseau (101) ;
une étape de notification d'adresse de réseau dans laquelle les moyens de notification d'adresse de réseau (103) du premier terminal de communication mobile par paquets (10) notifient au deuxième terminal de communication par paquets (30) l'adresse de réseau stockée dans les moyens de stockage d'adresse de réseau (102) ;
une étape de stockage d'adresse de réseau de destination dans laquelle les moyens de stockage d'adresse de réseau de destination (303) du deuxième terminal de communication par paquets (30) stockent l'adresse de réseau notifiée par le premier terminal de communication mobile par paquets (10), comme adresse de réseau de destination ;
une deuxième étape de génération de paquets (S173, S175) dans laquelle les premiers moyens de génération de paquets (110) du premier terminal de communication mobile par paquets (10) génèrent un paquet à partir de données à émettre vers le deuxième terminal de communication par paquets (30) ;
une deuxième étape d'émission de paquets (S174, S177) dans laquelle les premiers moyens d'émission de paquets (112) du premier terminal de communication mobile par paquets (10) fournissent au paquet l'adresse de réseau stockée dans les moyens de stockage d'adresse de réseau (102) et émettent le paquet vers le deuxième terminal de communication par paquets (30) ; et
une deuxième étape de réception de paquets (S178) dans laquelle les deuxièmes moyens de réception de paquets (301) du deuxième terminal de communication par paquets (30) reçoivent le paquet émis par le premier terminal de communication mobile par paquets (10) ;
dans lequel, dans l'étape d'acquisition d'adresse de réseau, quand il existe une pluralité de réseaux (50, 70) auxquels le premier terminal de communication mobile par paquets (10) peut être connecté, les moyens d'acquisition d'adresse de réseau (101) du premier terminal de communication mobile par paquets (10) acquièrent une pluralité desdites adresses de réseau à partir des réseaux respectifs (50, 70) ;
dans lequel, dans l'étape de stockage d'adresse de réseau, les moyens de stockage d'adresse de réseau (102) du premier terminal de communication mobile par paquets (10) stockent la pluralité d'adresses de réseau ;
dans lequel, dans l'étape de notification d'adresse de réseau, les moyens de notification d'adresse de réseau (103) du premier terminal de communication mobile par paquets (10) notifient au deuxième terminal de communication par paquets (30) la pluralité d'adresses de réseau ;
dans lequel, dans l'étape de stockage d'adresse de réseau de destination, quand une pluralité desdites adresses de réseau sont notifiées par le premier terminal de communication mobile par paquets (10), les moyens de stockage d'adresse de réseau de destination (303) du deuxième terminal de communication par paquets (30) stockent une pluralité desdites adresses de réseau de destination qui correspondent aux adresses de réseau respectif ;
dans lequel, dans la deuxième étape d'émission de paquets (S174, S177), quand une pluralité desdites adresses de réseau sont stockées dans les moyens de stockage d'adresse de réseau (102), les premiers moyens d'émission de paquets (112) du premier terminal de communication mobile par paquets (10) fournissent auxdits paquets générés à partir de données identiques par les premiers moyens de génération de paquets (110), les adresses de réseau acquises à partir des réseaux respectifs (50, 70) et émettent les paquets vers les réseaux respectifs (50, 70) ; et
dans lequel, dans la deuxième étape de réception de paquets (S178), les deuxièmes moyens de réception de paquets (301) du deuxième terminal de communication par paquets (30) reçoivent un paquet émis par le premier terminal de communication mobile par paquets (10), avec l'une de la pluralité d'adresses de réseau, et généré à partir de données identiques.
